(19) **Europäisches Patentamt**
**European Patent Office**
**Office européen des brevets**

(11) **EP 4 776 484 A1**

(12) **EUROPEAN PATENT APPLICATION**

(43) Date of publication:
**15.07.2026  Bulletin 2026/29**

(51) International Patent Classification (IPC):
**H02K 3/28** *(2006.01)*       **H02K 15/0643** *(2025.01)*

(21) Application number: 25226303.3

(22) Date of filing: **22.12.2025**

(52) Cooperative Patent Classification (CPC):
**H02K 3/28; H02K 15/0643**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority:  **31.12.2024  US 202419007448**

(71) Applicant: Cummins, Inc.
**Columbus, Indiana 47201 (US)**

(72) Inventors:
• **Zhu, Shaohong**
  **Columbus, 47201 (US)**
• **Paciura, Krzysztof**
  **Columbus, 47201 (US)**
• **Barden, Richard Matthew**
  **Columbus, 47201 (US)**

(74) Representative: **Whitfield, Jack Stephen**
**Withers & Rogers LLP**
**2 London Bridge**
**London SE1 9RA (GB)**

(54) **HAIRPIN WINDING ELECTRIC MACHINE AND METHODS**

(57)    The present invention relates to a motor winding design method that enables the implementation of high parallel paths per phase in both high-speed and low-speed electric motors. The method involves using multiple parallel paths per phase, where each parallel path occupies one slot per pole and the winding configuration incorporates both forward and backward parallel paths. The design features a layer-group winding configuration with at least two layers, with jumper wires connecting different layer groups. Additionally, the method includes a flexibility mechanism that supports scalable configurations for various motor types, including 3-phase and 6-phase systems. This approach enhances motor performance and efficiency while providing adaptable design options.

Processed by Luminess, 75001 PARIS (FR)

EP 4 776 484 A1

**Description**

CROSS-REFERENCE TO RELATED APPLICATION

This application claims the benefit of priority to U.S. Patent Application No. 19/007,448, filed on December 31, 2024, and entitled "Unified Hairpin Winding Connection Method" (Attorney Docket No. CI-23-0638-01-US), the entire disclosure of which is hereby incorporated by reference in its entirety.

BACKGROUND

An electric motor, a key component in an electric powertrain, has gained increasing attention. An electric machine is electrically connected to the traction battery and provides torque to the driven wheels. The electric powertrain consists of an electric motor, an inverter, and an optional gearbox, where the inverter receives DC power from the battery and converts it into either DC or AC power to drive the electric motor. This machine typically includes a stator and a rotor that work together to convert electrical energy into mechanical motion. The primary focus is on maximizing power, torque density and efficiency while minimizing the weight of electric motors. While EVs have several advantages over internal combustion engine-powered vehicles, one issue is their limited range, especially for vehicles without range extender internal combustion engines.

To address this issue, there is a need for technology that improves the efficiency of power usage in "electric motors" or "electric traction motors." The key to achieving this is by increasing the slot-filling factor of windings, which has led to a revolution in winding technology. Hairpin winding is a growing technology that is gaining popularity in the automotive industry as it allows for the design of more efficient motors that use less space and weigh less. Additionally, increased motor peak speed is desirable, but it can lead to increased heat due to losses in the windings, making it necessary to reduce winding losses.

In conclusion, the need for an improved electric machine that overcomes these shortcomings remains. By incorporating innovative technologies such as hairpin winding, significant strides can be made toward creating electric vehicles that are more competitive and affordable for everyone while reducing their environmental impact.

SUMMARY

This section provides a summary of the practical implementations of the motor winding design method described in the claims, showcasing its application across various motor configurations. The method can be implemented in both high-speed and low-speed electric motors, highlighting its versatility and the benefits of the high parallel path configuration across different motor types. By using a layer-group winding configuration with jumper wires, and enabling both forward and backward parallel paths, the method offers flexibility and scalability. It is also adaptable to both 3-phase and 6-phase systems, optimizing motor performance and efficiency in real-world applications.

One implementation describes a method for creating hairpin windings where the highest number of parallel paths per phase equals twice the number of pole pairs. The method ensures that each parallel path spans all the slots per pole per phase, encompassing all hairpin layers, while maintaining an equal number of conductors in each parallel path regardless of slot position. Another implementation further refines this method by specifying that each parallel path begins either at the innermost or outermost layer of the hairpin layers, increasing flexibility. Additionally, the hairpin windings are described as integrated slot distributed windings, enhancing the overall efficiency and design adaptability.

In other implementations, the method incorporates features such as implementing layer changes prior to phasor changes. This is achieved using a singular type of normal hairpin with a specific winding slot pitch and welding side, ensuring the uniformity of the winding structure. Phasor changes are realized by jumpers with a jumper slot pitch equal to the winding slot pitch, which can be adjusted by an integer. The phasor changes can occur at either the innermost or outmost layers, or at both, allowing for more control over the motor's electrical characteristics.

The method has been further applied to electric machines, including motors and generators. It is particularly beneficial for electric motors, such as traction motors for electric vehicles, where the design optimizes efficiency and reduces AC losses. The system for stator assemblies used in these motors incorporates a winding scheme that spans all slots per pole per phase, with jumper wires ensuring phase alignment. Additionally, the system supports both full-pitch and short-pitch windings and can be adapted to multiple three-phase windings, with or without angle shifts.

The motor winding design is scalable, allowing for the easy transition between 3-phase and 6-phase systems, and adaptable to a range of slot-pole combinations, motor sizes, and power outputs. It also supports the use of both equal leg-length and unequal leg-length conductors, which are used for jumper connections between layer groups. The method further includes a flexibility mechanism that allows the number of parallel paths per phase to be varied without altering the core assembly method. The winding system is designed to minimize manufacturing complexity and cost, improving production efficiency and reducing the need for specialized equipment.

Overall, these implementations demonstrate the versatility, scalability, and efficiency of the motor winding design method, making it suitable for a wide range of motor applications, from high-power, high-efficiency motors to cost-effective solutions for smaller motors. The method optimizes performance, enhances torque and power density, and simplifies the manufacturing process, offering a versatile solution for modern electric motor designs.

In more detail:
In an aspect of the disclosure, a method of forming a unified diagonal hairpin winding for an electric machine is provided. The method comprises: inserting rectangular conductors into slots of a laminated stator core; arranging the conductors into multiple radial layers within the slots such that each parallel path spans all slots per pole per phase and includes the same number of conductors; forming a number of parallel paths per phase (npp) equal to twice the number of pole pairs (2p), where p is a pole-pair number; executing layer changes prior to phasor changes using normal hairpins bent to a winding slot pitch (yn) with a uniform welding-side arrangement at a stator end; executing phasor changes on at least one of an innermost or outermost conductor layer using jumper conductors bent to a jumper slot pitch (yn ± k), where k is an integer, including flyer jumpers to connect between distinct layers; and welding the conductor ends in rows of uniform orientation on the welding side.

Two or more of the parallel paths may be connected in series to realize npp = 2p/2 or npp = 2p/3, the series connections being made with jumper conductors of pitch yn on at least one of the innermost or outermost layers, thereby shortening end-turn length and reducing copper loss.

Flyer jumpers may interconnect an innermost conductor layer and an outermost conductor layer, the flyer jumpers having unequal leg lengths to simplify insertion and maintain predetermined spacing at the welding side.

Each parallel path may originate from a common phasor position and sequentially transition across other phasors, thereby balancing current distribution and suppressing circulating currents.

The winding may be short-pitched with a pitch ratio between 0.8 and 0.9 of a full-pitch winding, thereby suppressing 5th and 7th harmonic currents while maintaining a high fundamental winding factor.

The jumper pitch (yn ± k) may be selected such that the fundamental winding factor is within ±5% of that of a full-pitch winding.

The conductors may be bent with unequal leg lengths on the welding side, thereby reducing bending stress and improving weld accessibility.

Each conductor may be coated with an insulating varnish, and the varnish may be selectively removed from conductor end portions at the welding side, thereby lowering joint resistance.

A thermally conductive resin may be applied around an end-turn region, thereby enhancing heat dissipation to the stator core and stabilising the winding against vibration.

The unified diagonal hairpin connection may be applicable across slot-pole combinations including at least a 36-slot/6-pole machine, a 54-slot/6-pole machine, and a 72-slot/6-pole machine.

In another aspect of the disclosure, an electric machine is provided. The electric machine comprises: a laminated stator core having a plurality of slots; a plurality of rectangular conductors arranged in multiple radial layers within the slots; and a unified diagonal hairpin winding formed by a method as described above.

The winding may be configured for three-phase or six-phase operation with or without phase shift.

Each parallel path may terminate at a copper busbar positioned at the stator end, the busbar including radial extensions aligned with phase groups.

Weld rows may be arranged at constant angular spacing around the stator circumference, thereby distributing thermal load evenly and enabling robotic welding alignment.

The electric machine may be part of an emobility application including at least one of a traction motor or an inverter.

BRIEF DESCRIPTION OF THE DRAWINGS

FIG. 1 is a schematic diagram of a dual-axle multi-mode adjustable hybrid vehicle system with integrated front axle;

FIG. 2 is a schematic diagram of an integrated axle;

FIG. 3 is a schematic diagram of another dual-axle multi-mode adjustable hybrid vehicle system with integrated front axle;

FIG. 4 is a schematic diagram of an example of a three-axle multi-mode adjustable hybrid vehicle system with integrated front axle;

FIG. 5 is a schematic diagram of an example of a three-axle multi-mode adjustable hybrid vehicle system with integrated front axle;

FIG. 6 is a schematic diagram of an example of a three-axle multi-mode adjustable hybrid vehicle system with integrated front axle;

FIG. 7 is a schematic diagram of a controller operatively coupled with other components of the system;

FIG. 8 is a schematic diagram showing various detailed aspects of an electric machine. It may require bearings on both sides, and since it is rotating, the airgap between the stator and rotor needs to be clear and visible.

FIG. 9 is a plan view of a stator of the electric machine in FIG. 8 with Feature A being a close-up view showing winding layers of the stator. The stator of the electric machine is equipped with hairpin winding.

FIG. 10 is a phasor diagram of an electric machine that includes 36 slots and 6 poles with full-pitch winding.

FIG. 11A is a diagram for a winding scheme with diagonal hairpin winding for a 36-slot, 6-pole electric machine with full-pitch winding. This is a winding diagram showing 6 parallel paths per phase (npp = 2p) for a 36-slot, 6-pole electric machine, depicting only phase A. The diagrams for phases B and C are not shown but can be easily obtained by shifting 120 electrical degrees. For this 36-slot, 6-pole machine, 120 electrical degrees corresponds to 40 mechanical degrees and 4 slots.

FIG. 11B is a continuation of the diagram in FIG. 11A.

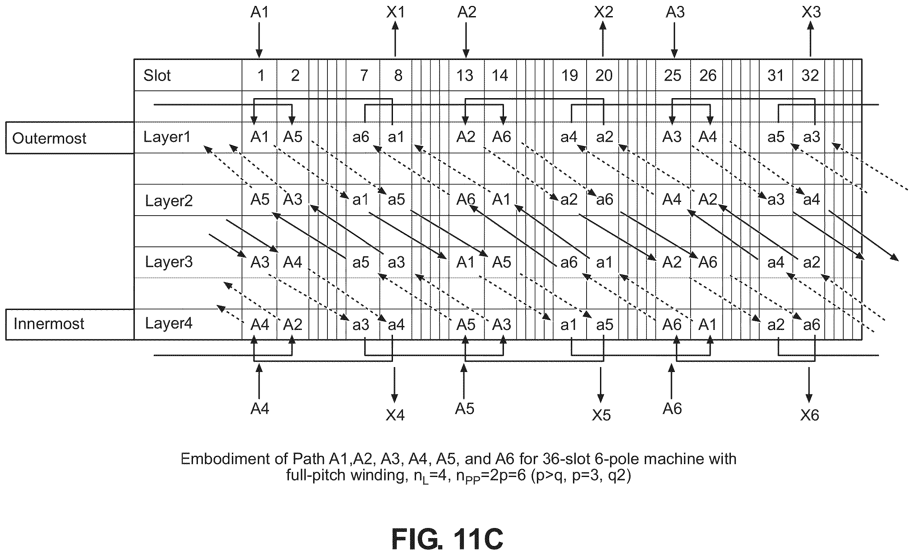

FIG. 11C is an embodiment of Path A1, A2, A3, A4, A5, and A6 for a 36-slot, 6-pole electric machine with full-pitch winding. The winding configuration is illustrated with four layers (Layer 1 to Layer 4), each consisting of parallel paths spanning across the slots. The parallel paths are labeled as A1, A2, A3, A4, A5, and A6, corresponding to the slots and layers of the stator. The winding design is configured with 6 parallel paths per phase, where each path occupies a slot in each layer of the stator. The winding follows the pattern of full-pitch winding, where nL=4, npp=2p=6, p=3, and q=2, ensuring proper phase alignment and efficiency in the electric machine.

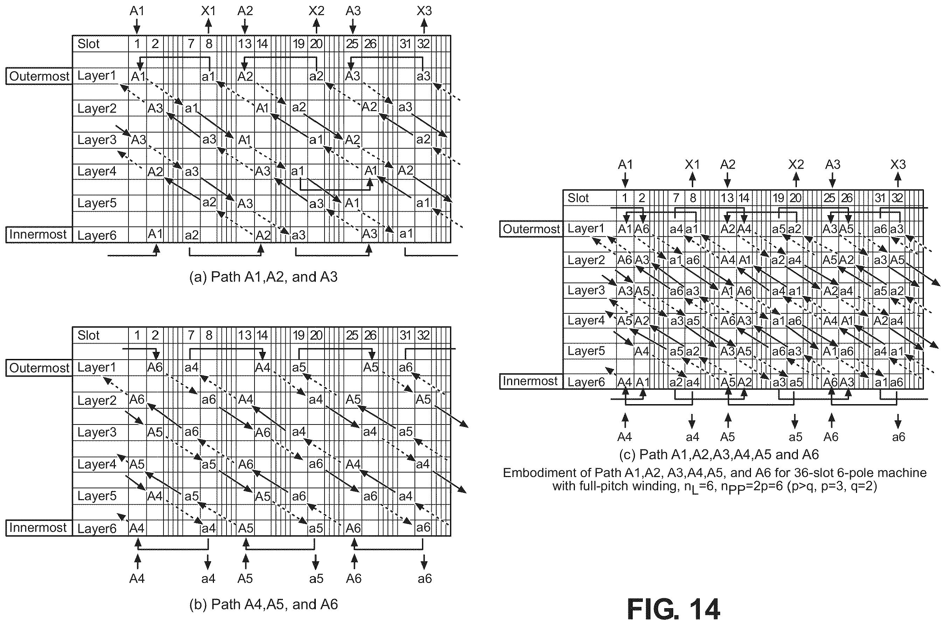

FIG. 14 illustrates the phase connection for a 36-slot, 6-pole electric machine with full-pitch winding. The diagram shows the three phases (A, B, and C) of the motor, with each phase consisting of six parallel paths labeled as A1-A6, B1-B6, and C1-C6. The connections are arranged in such a way that each phase is represented by a set of parallel paths, with alternating positive and negative terminals for proper phase alignment. The winding configuration follows a full-pitch design, with parameters set as nL=4, npp=2p=6, p=3, and q=2, ensuring the motor operates efficiently and with correct phase distribution.

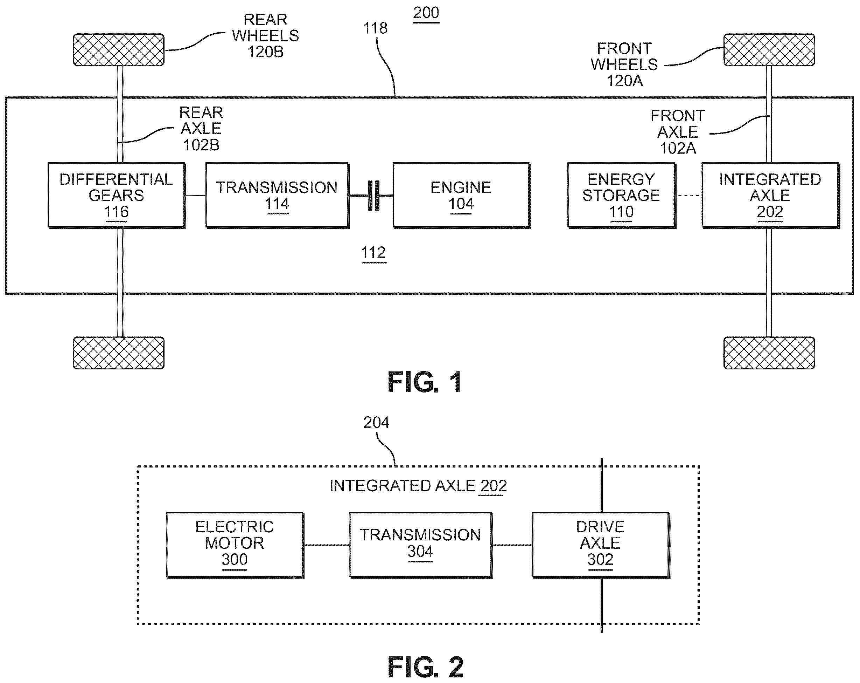

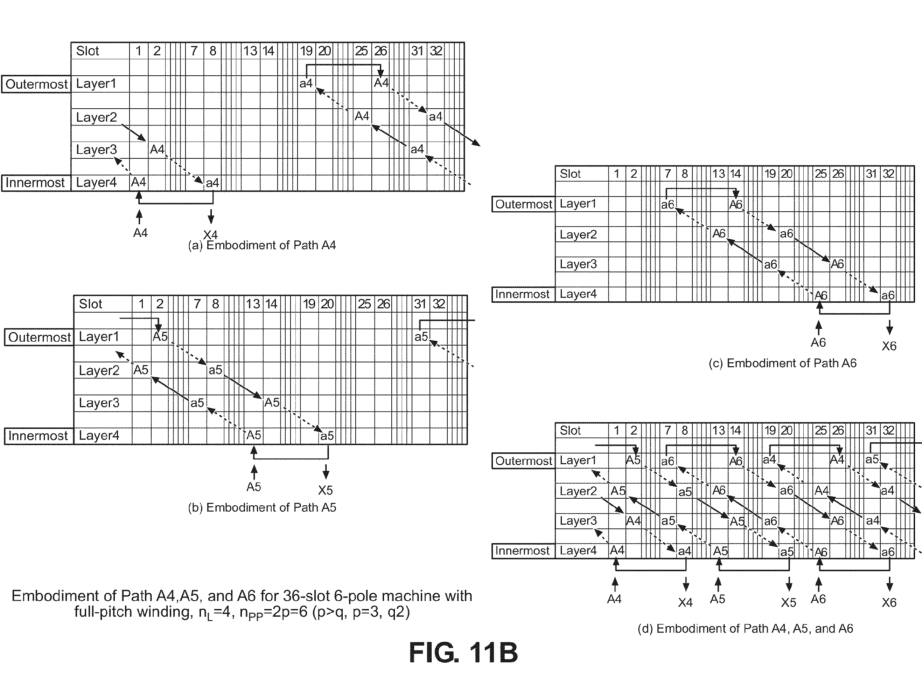

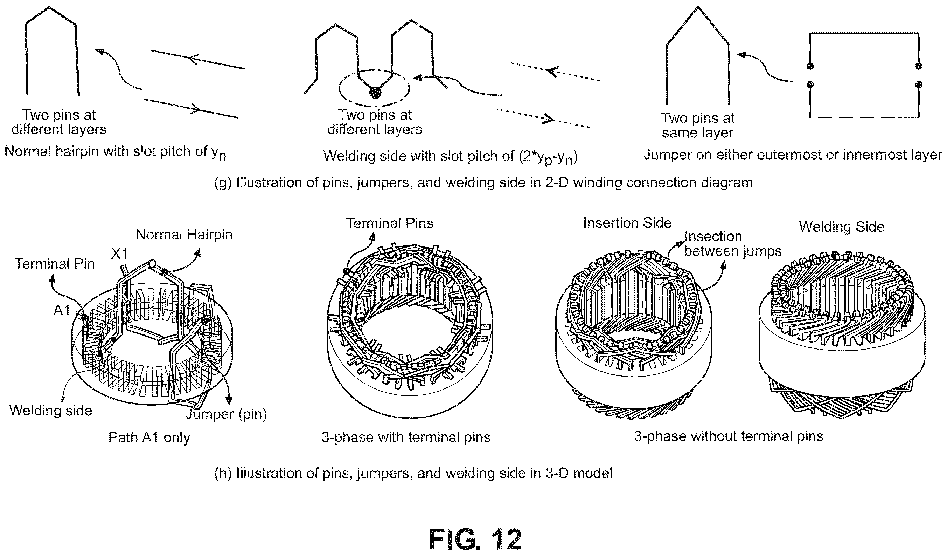

FIG. 12 is a diagram showing assembly steps of pins and jumpers being assembled and arranged within a stator core for the electric machine in FIGS. 1A and 11B.

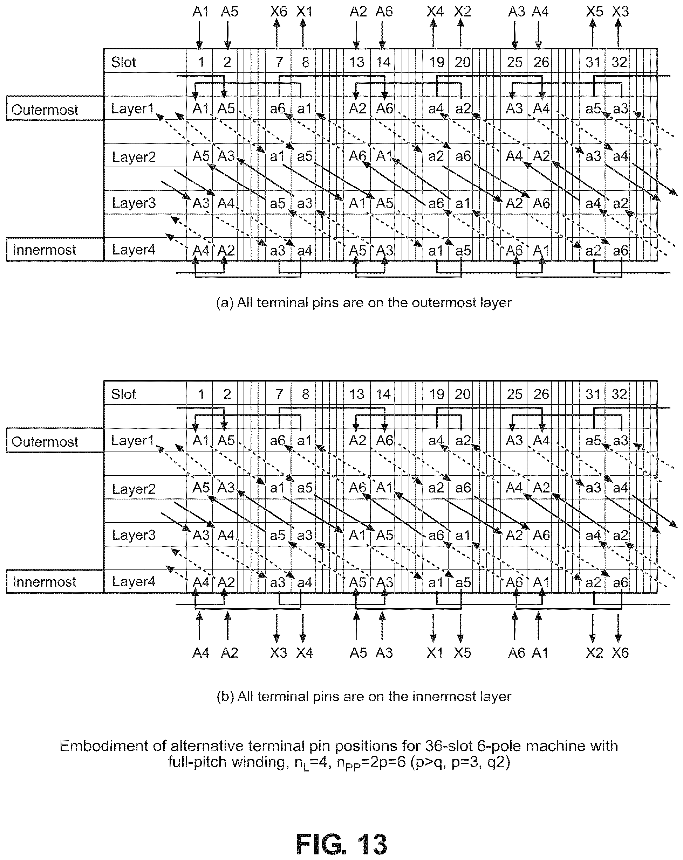

FIG. 13 is a diagram showing an alternate diagonal hairpin winding scheme for an electric machine that includes 36 slots and 6 poles with full-pitch winding such that $n_{pp}=2p/2$, $p>q$, $p=3$, and $q=2$. It is a winding diagram showing 3 (npp=2p/2) parallel path per phase for a 36-slot, 6-pole electric machine.

FIG. 14 is a diagram showing a diagonal hairpin winding scheme for an electric machine that includes 36 slots, 6 poles with full-pitch winding, $n_{pp}=2p/3$ such that $p>q$, $p=3$, and $q=2$. It is a winding diagram showing 2 (npp=2p/3) parallel path per phase for a 36-slot, 6-pole electric machine.

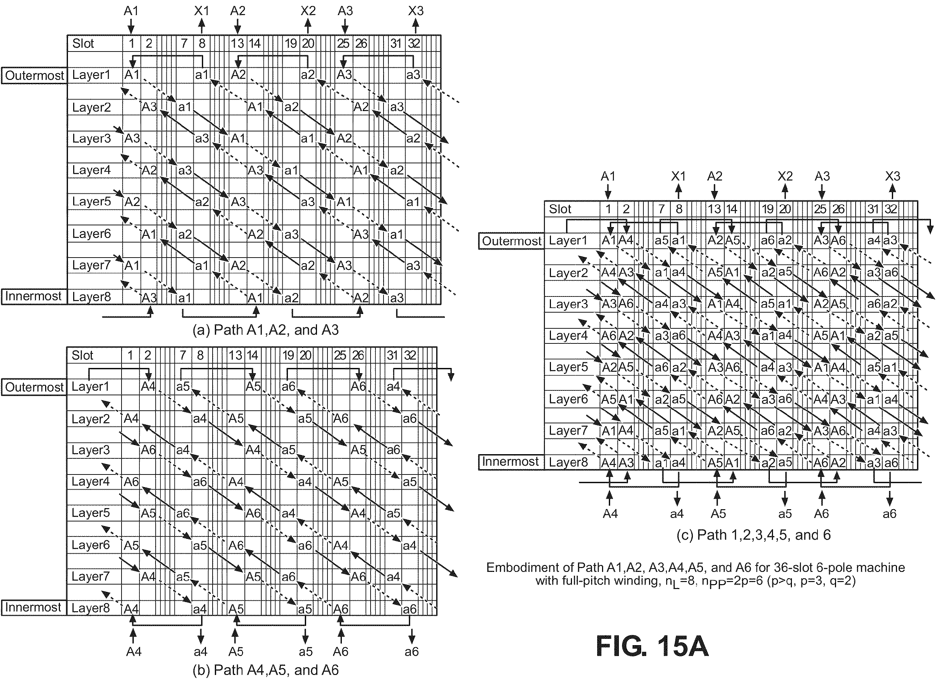

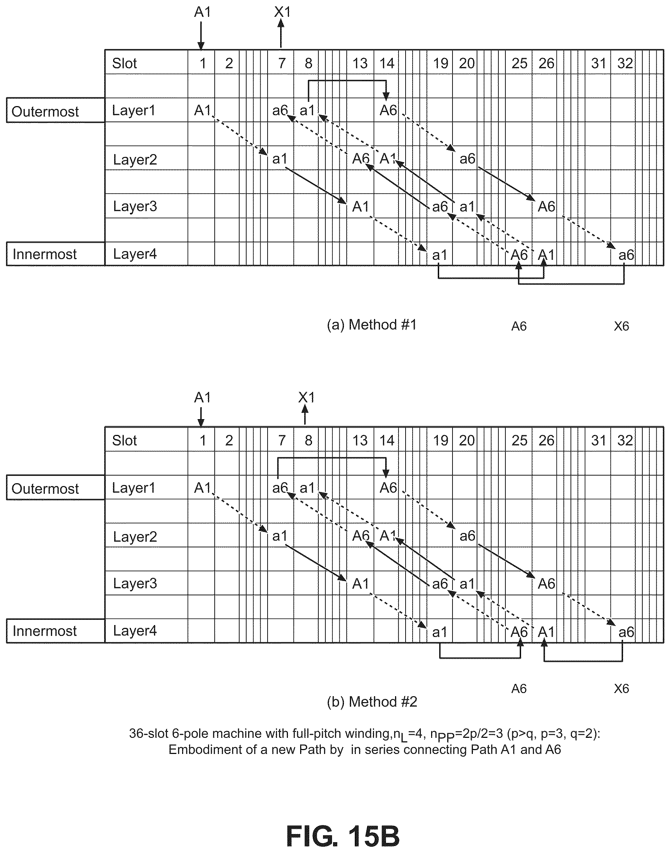

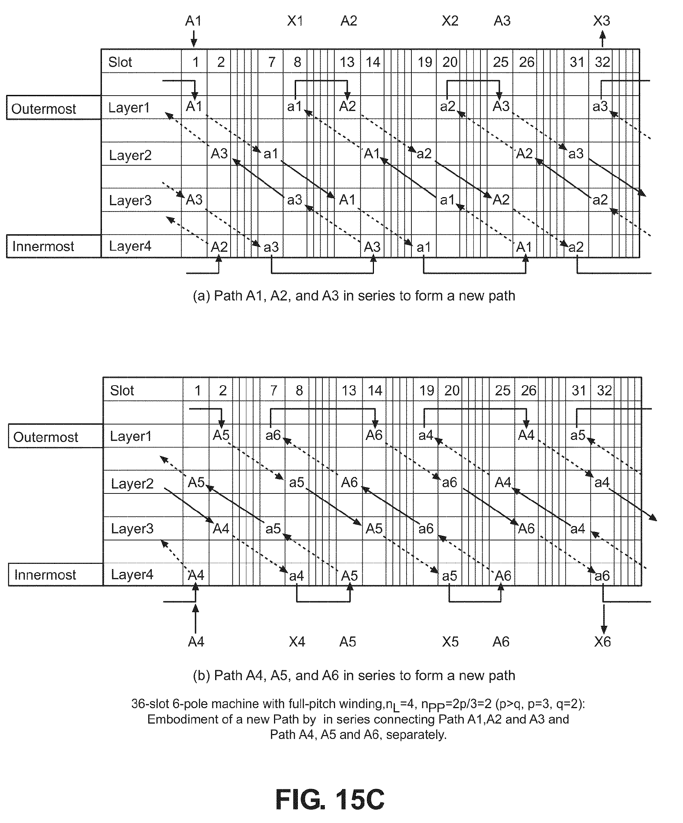

FIG. 15 is a diagram showing an example layout for an electric machine that includes 36 slots and 6 poles in full- and short-pitch windings where $p>q$, $p=3$, and $q=2$.

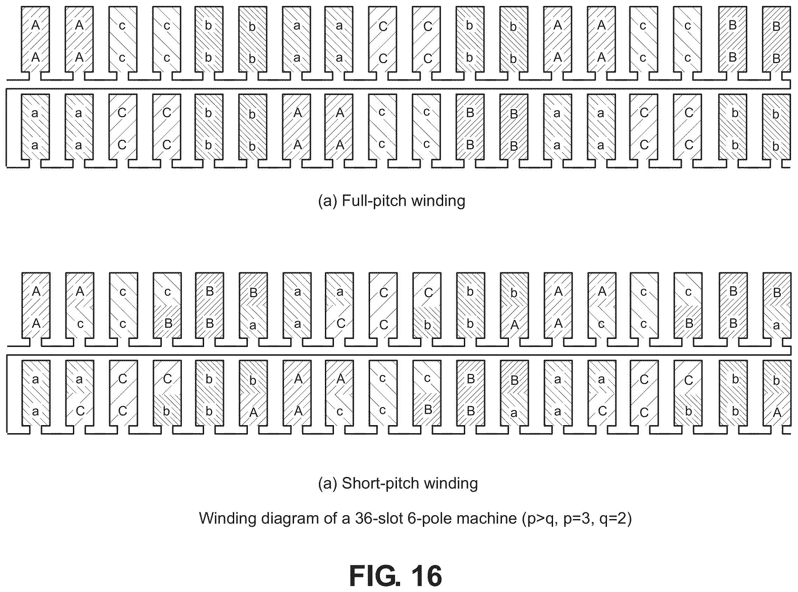

FIG. 16 is a diagram showing a diagonal hairpin winding scheme of an electric machine that includes 36 slots and 6 poles with short-pitch winding where $n_{pp}=2p$, $p>q$, $p=3$, $q=2$. The previous diagram was for full-pitch winding, and this one is for a short-pitch.

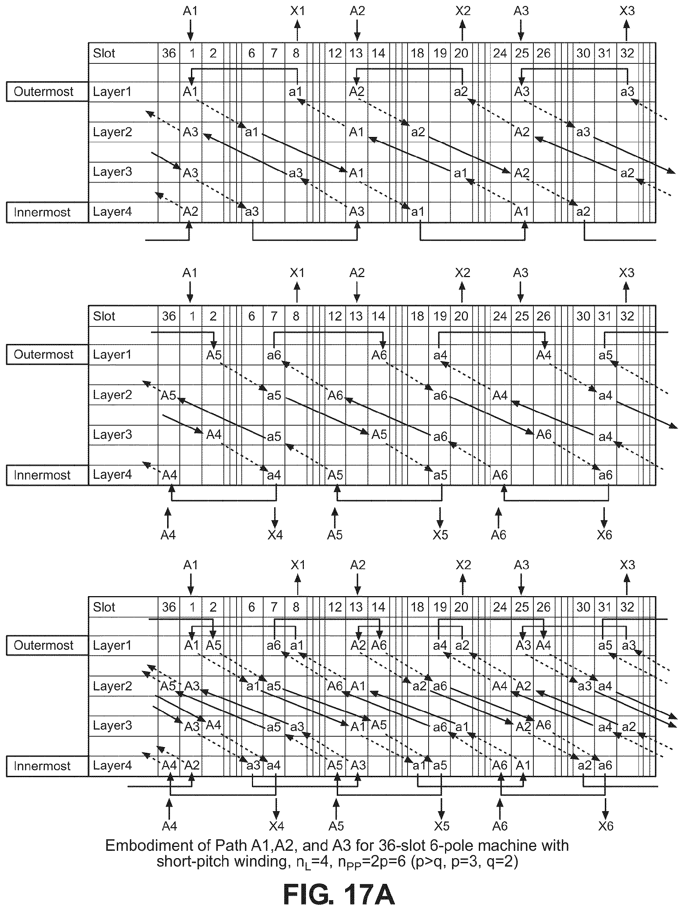

FIG. 17A is a diagram showing a diagonal hairpin winding scheme of an electric machine that includes 54 slots and 6 poles where $p=q=3$ with full-pitch winding.

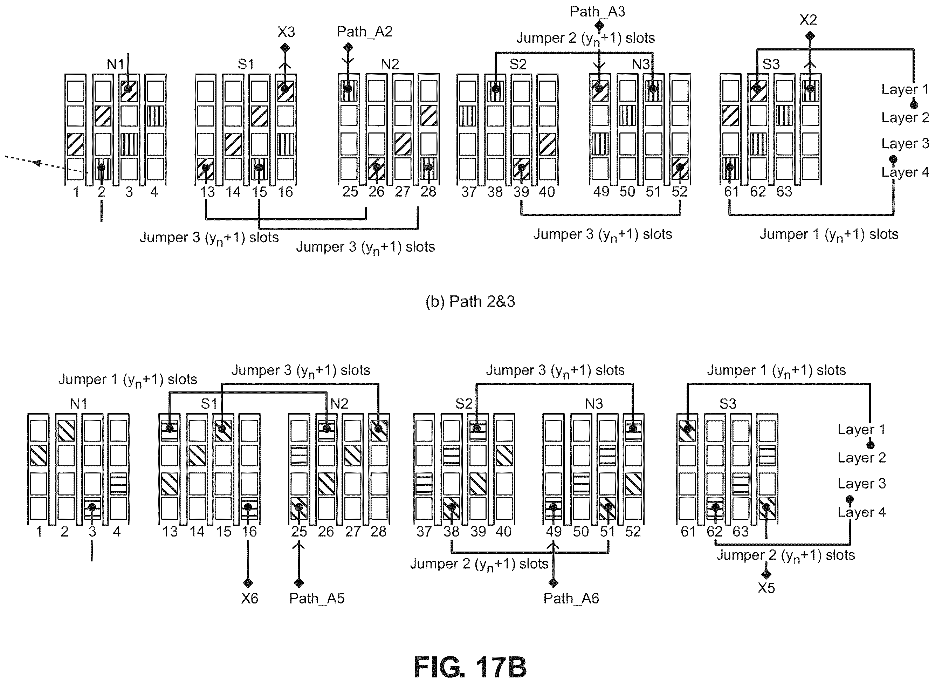

FIG. 17B is a continuation of the diagram in FIG. 17A.

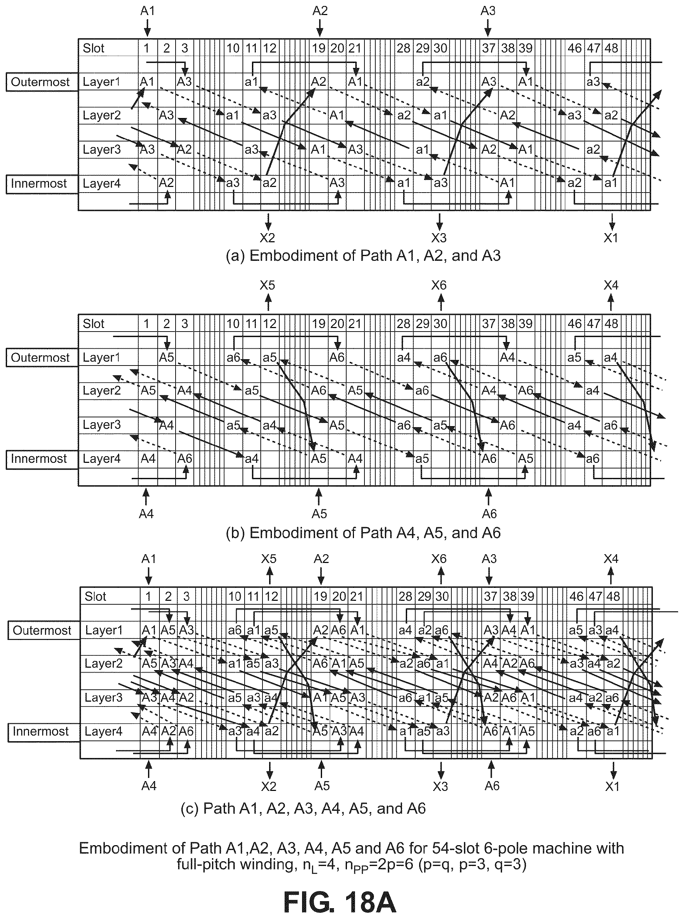

FIG. 18A is a diagram showing a diagonal hairpin winding scheme of an electric machine includes 72 slots and 6-poles where $p<q$, $p=3$, $q=4$ with full-pitch winding.

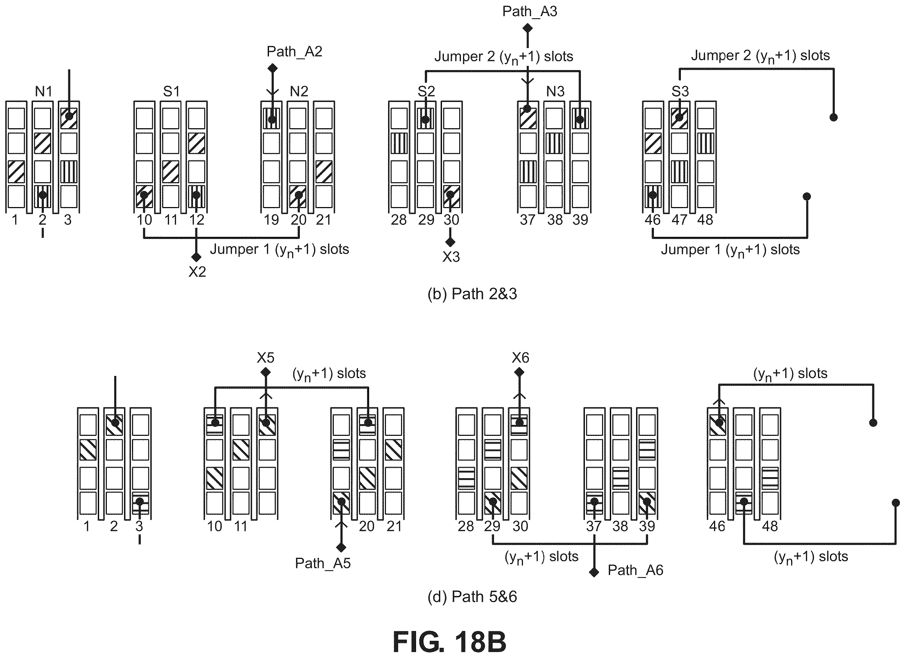

FIG. 18B is a continuation of the diagram in FIG. 18A.

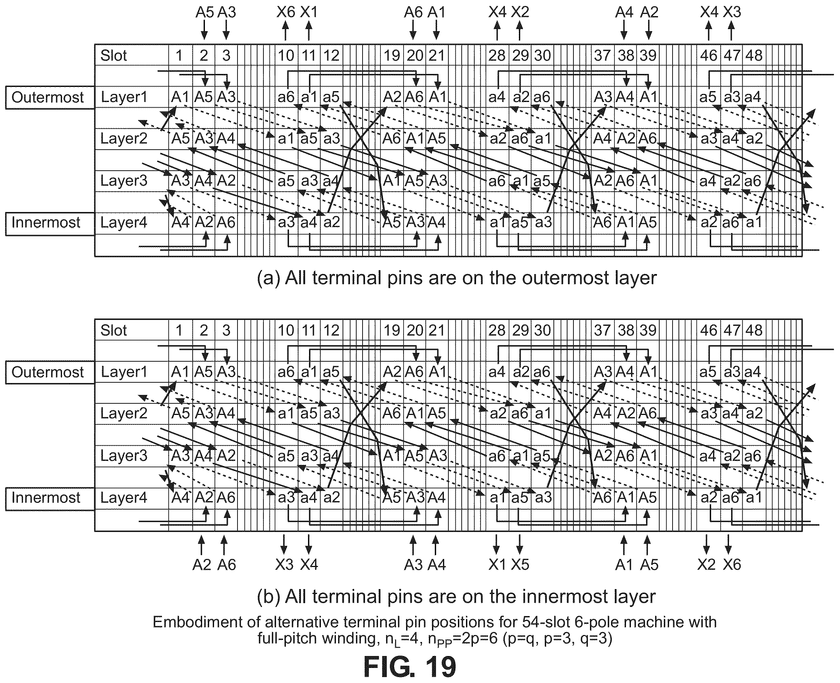

FIG. 19 is a diagram showing a modification to the unified diagonal hairpin winding scheme using a Flyer Jumper concept.

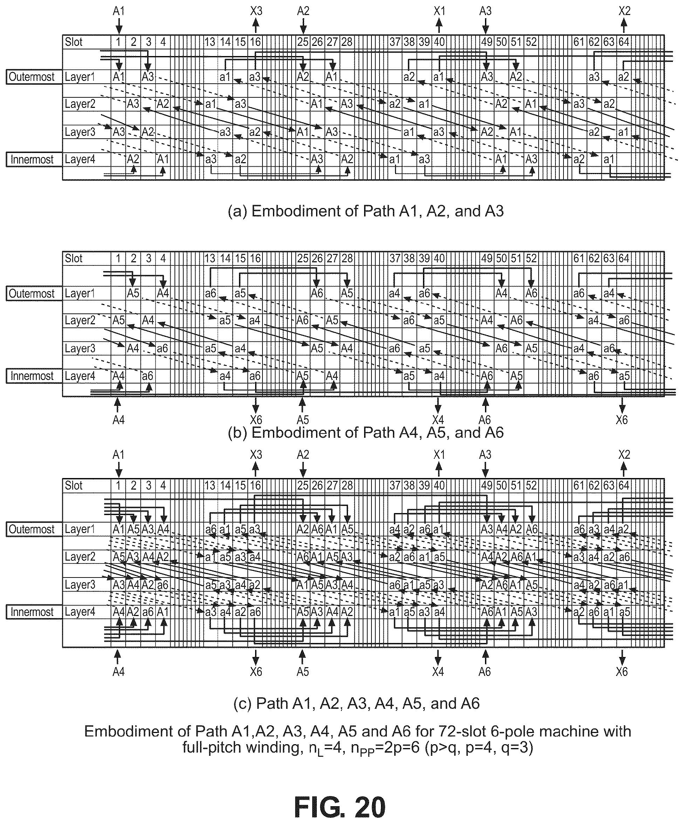

FIG. 20 is a diagram showing an electric machine that includes 36 slots and 6 poles with full-pitch winding (similar to Scenario 1a where $n_{pp}=2p=6$).

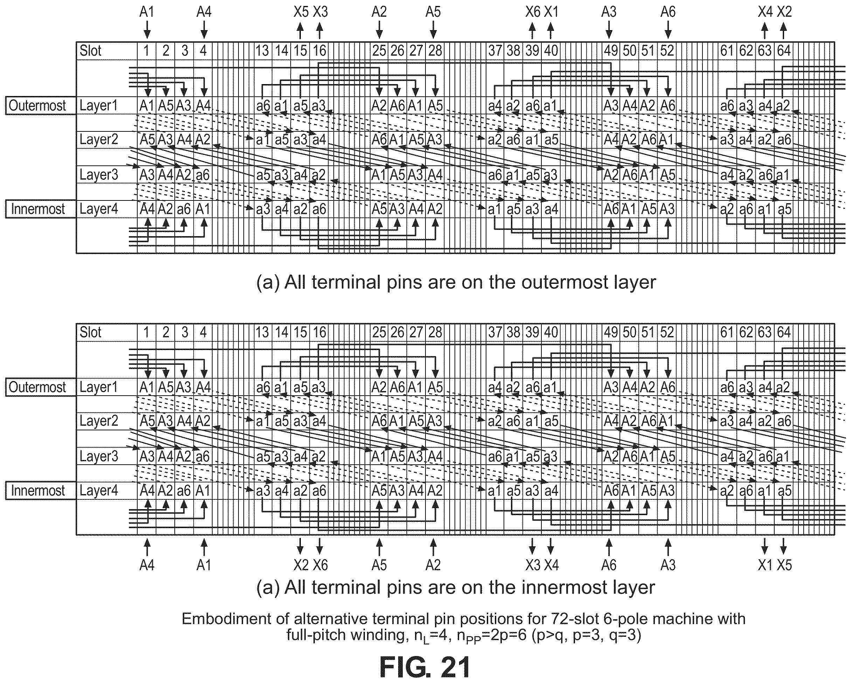

FIG. 21 is a diagram showing perspective views of a 3D model of the 96-slot, 8-pole electric machine with short-pitch winding.

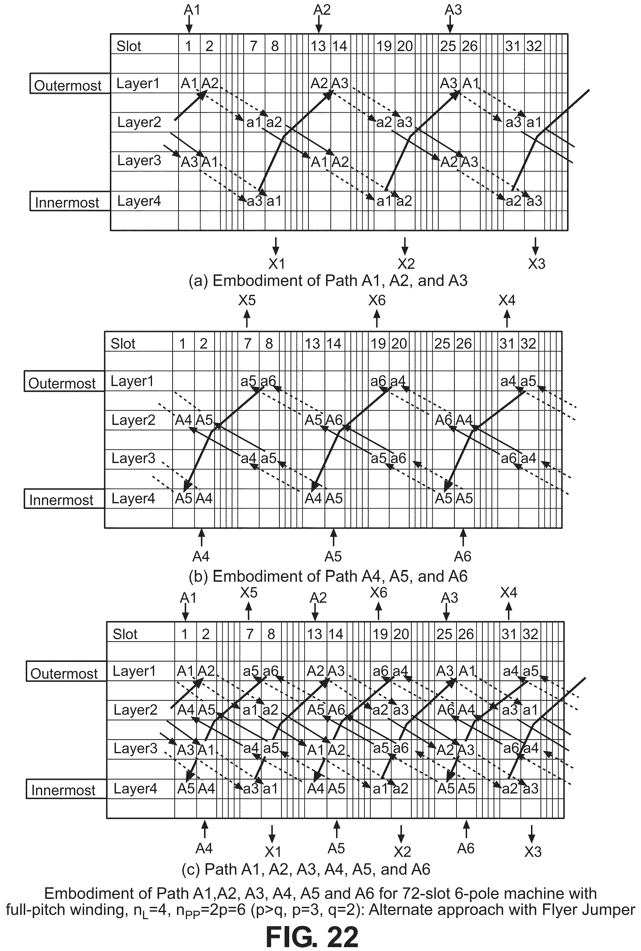

FIG. 22 The figure shows the embodiment of Path A1, A2, A3, A4, A5, and A6 for a 72-slot, 6-pole electric machine with full-pitch winding. The winding configuration is displayed across four layers, with the parallel paths (A1-A6) arranged in a specific sequence through the slots. This arrangement is designed using a flyer jumper approach, where the winding paths alternate between different layers to optimize the phase alignment. The diagram also includes the parameters for the machine, with nL=4, npp=2p=6, p=3, and q=2, following a full-pitch winding design. The figure illustrates how this alternate approach, using the flyer jumper, ensures efficient phase distribution and enhances the performance of the machine.

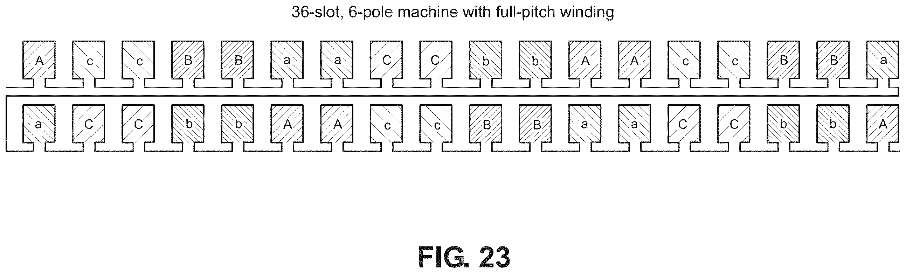

FIG. 23 is a layout of a winding scheme for a 36-slot, 6-pole electric machine with full-pitch winding.

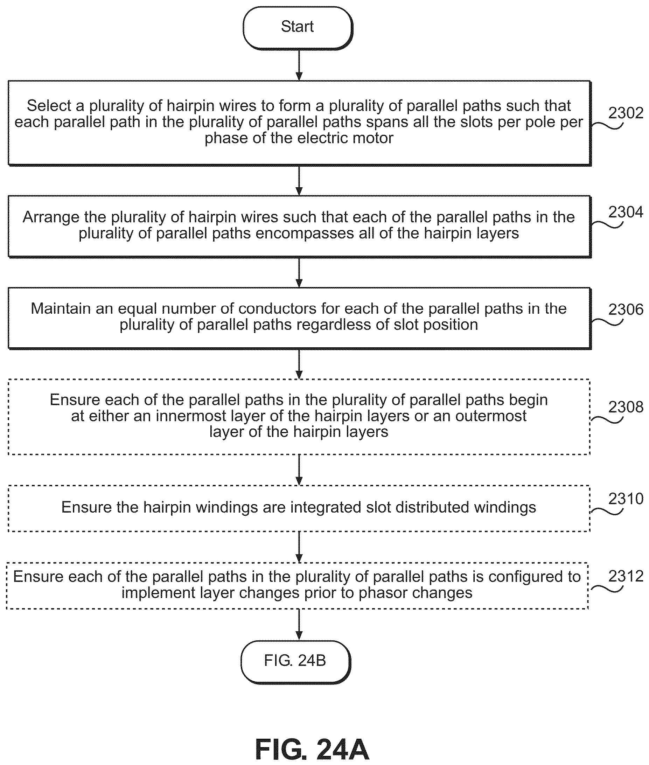

FIG. 24A is a flow chart of a method for creating hairpin windings for an electric motor. The disclosure provides an example where each of the parallel paths in the plurality of parallel paths begins either at the innermost layer or the outermost layer of the hairpin layers. However, the start and end points of these parallel paths can be located at any position within the winding diagram, depending on the specific design and preference. This positioning is influenced by factors such as the placement of terminal busbars or connection rings, which are connected to the inverter phase lead wires. For instance, in a 3-phase motor, there would typically be three terminal wires, one for each phase.

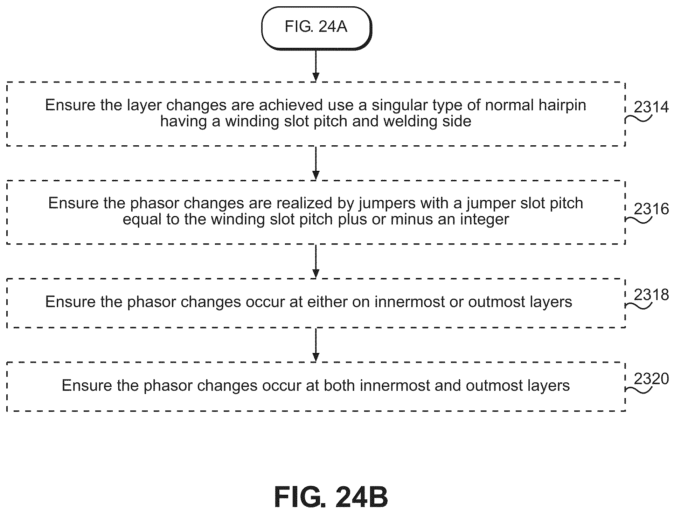

FIG. 24B is a continuation of the flow chart in FIG. 23A, according to an example of the present disclosure.

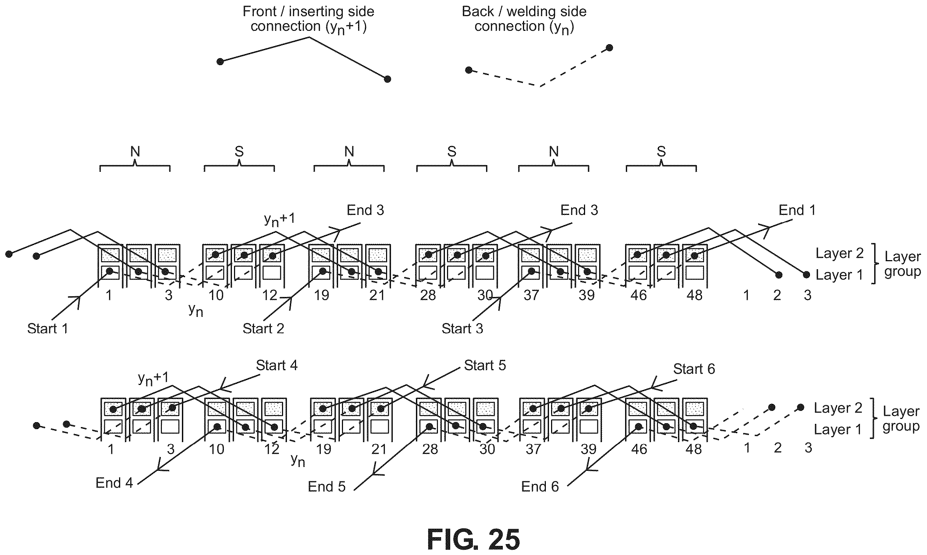

FIG. 25 is a diagram of a winding configuration for a 54-slot, 6-pole motor with 6 parallel paths per phase, illustrating the phase A winding layout and the use of jumper wires to connect parallel paths through various layer groups.

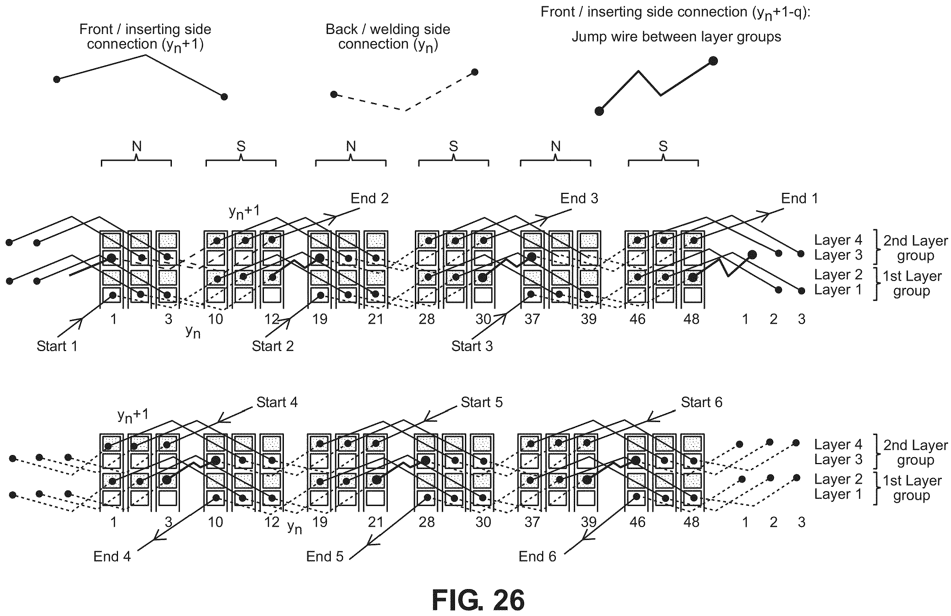

FIG. 26 is a diagram of a winding design for a 54-slot, 6-pole motor with 4-layer hairpin windings, showing how the winding design is divided into two 2-layer hairpin winding designs with jumper wires connecting different layer groups.

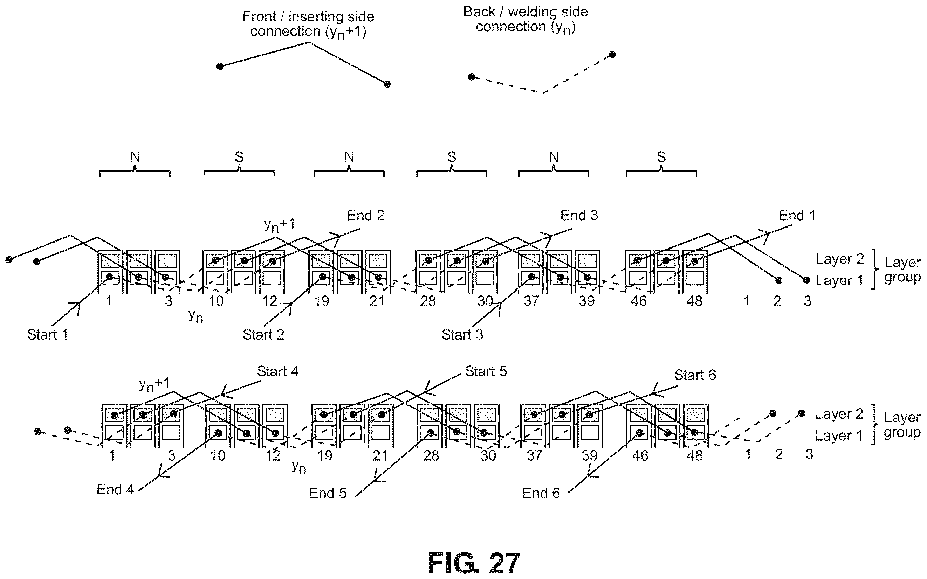

FIG. 27 is a diagram of a winding configuration for a 96-slot, 8-pole motor with 8 parallel paths per phase, depicting the first and second parallel paths starting from the top and bottom layers, with necessary mechanical shifts for phases B and C.

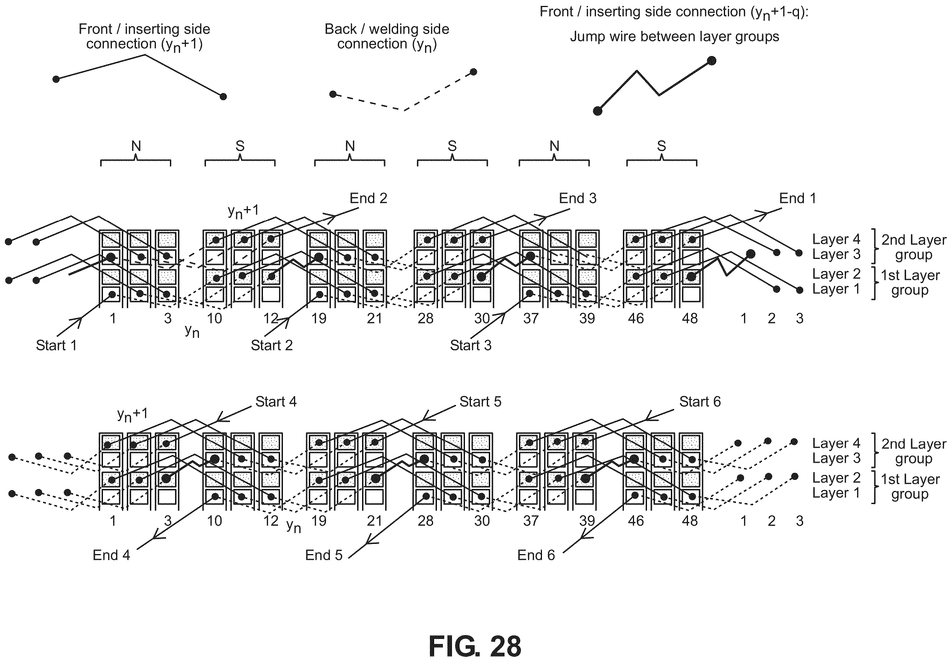

FIG. 28 is a diagram of a winding design for a 96-slot, 8-pole motor with 8 parallel paths per phase, incorporating 4-layer hairpin windings, showing the division into two 2-layer hairpin winding designs with jumper wires used to connect layer groups.

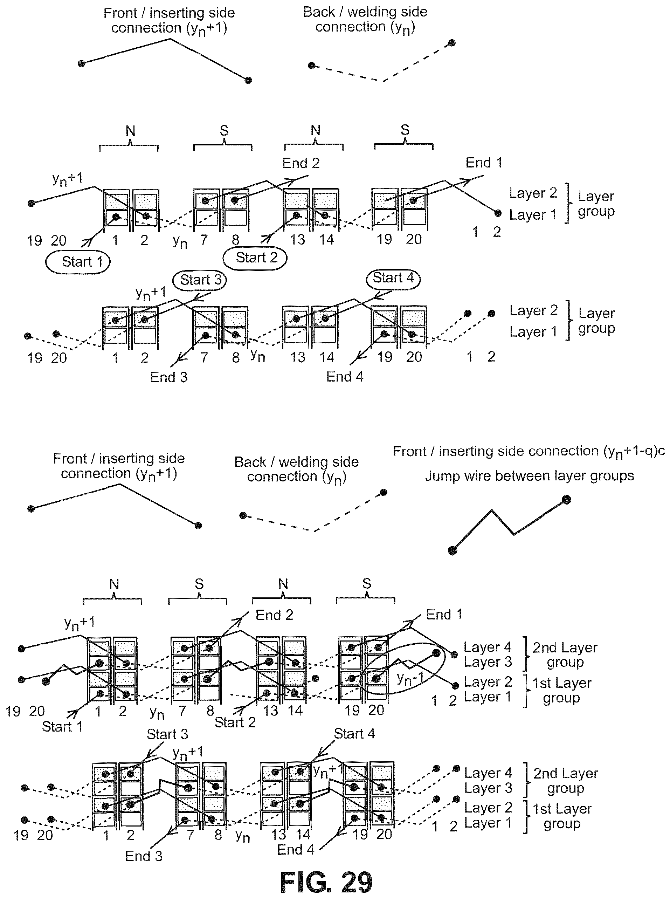

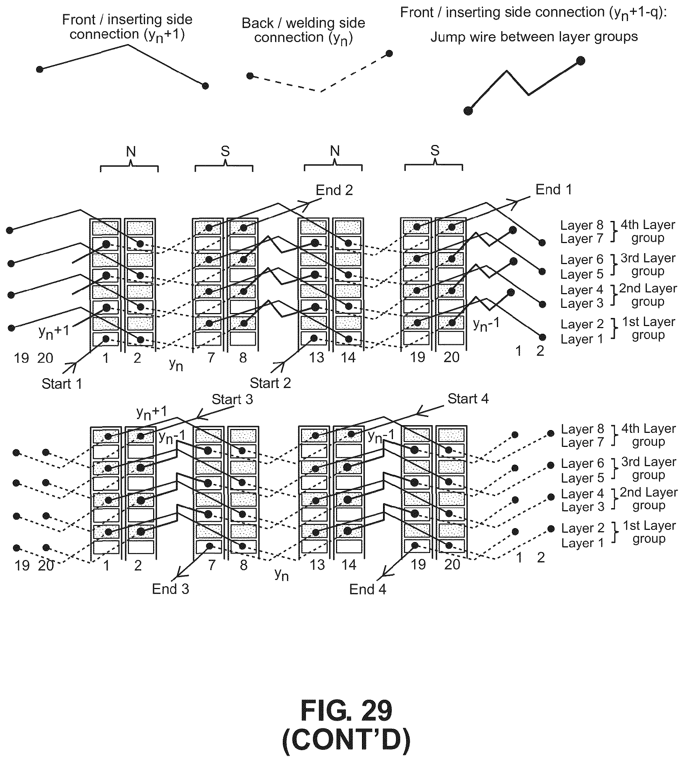

FIG. 29 illustrates various winding configurations for a 24-slot, 4-pole electric motor using different hairpin winding designs. The top portion of the figure demonstrates a 3-phase motor configuration with 4 parallel paths per phase, including phase shifts and the corresponding mechanical degrees. The middle section presents a 4-layer hairpin winding design, showing the connections between different layer groups via jumpers. The bottom section depicts a 5-layer hairpin winding design, further detailing the inter-layer connections with jumpers. These examples highlight the flexibility and scalability of the winding design for different motor configurations and phase requirements.

DETAILED DESCRIPTION

Embodiments of the present disclosure are described herein. It is to be understood, however, that the disclosed embodiments are merely examples and other embodiments can take various and alternative forms. The figures are not necessarily to scale; some features could be exaggerated or minimized to show details of particular components. Therefore, specific structural and functional details disclosed herein are not to be interpreted as limiting, but merely as a representative basis for teaching one skilled in the art to variously employ the present invention. As those of ordinary skill in the art will understand, various features illustrated and described with reference to any one of the figures can be combined with features illustrated in one or more other figures to produce embodiments that are not explicitly illustrated or described. The combinations of features illustrated provide representative embodiments for typical applications. Various combinations and modifications of the features consistent with the teachings of this disclosure, however, could be desired for particular applications or implementations.

In electrified vehicles, electric motors convert electricity supplied by batteries into motion to be transmitted the wheels. In some vehicles, there is a single, centrally positioned electric motor that powers one or more of the vehicle wheels, and in other vehicles, one or more of the wheels have an electric motor (referred to sometimes as a hub motor) positioned at each driven wheel. The electric motors typically include a stationary stator with a plurality of stator slots disposed circumferentially about the stator. Windings are located within the stator slots and carry an alternating current voltage. It can be either alternating current (AC) or direct current (DC), depending on whether the motor is an AC motor or a DC motor, with alternating current being more commonly used in traction motor applications today.

A rotor is disposed in the stator for rotating relative to the stator in response to the alternating current voltage carried by the windings. This is the case for an inner rotor motor; but there is also outer runner motor. While only an AC motor may be illustrated, this disclosure can also be applicable for and adapted to DC motors as one skilled in the art will appreciate.

Motion is achieved by creating Rotating magnetic fields between the stator and the rotor. This action creates push and pull forces between the stator and the rotor to cause the rotor to rotate relative to the stator. In the stator, a magnetic field is generated by the electricity running through the windings. For the rotor, there are typically two different dominant technologies: (i) synchronous motor where there is a magnetic field generated by wound field winding or permanent magnets in the rotor and (ii) induction motors or asynchronous motor with induced magnetic field at the rotor. In induction motors, metal bars (e.g., aluminum or copper bars) in the rotor are within the stator's magnetic field, causing an electrical current to be induced in them to thereby generate the rotor's magnetic field.

A hairpin motor is an electric motor whose stator winding is done with hairpins (e.g., instead of round wires). Hairpins are large, rectangular wires whose symmetrical and solid shape of hairpins makes them easier to wind than round wires, which simplifies assembly a great deal. Unlike round wires, hairpins can be precisely positioned, leading to a much cleaner design. Round wires need stich cords to hold the winding together (a process known as stator lacing). This is not required for hairpins.

The form factor of hairpins allows for a better fill factor in stator slots when compared to traditional round wires. For instance, the rectangular profile of hairpins allows for them to be assembled within a stator slot similar to building blocks where the sides of adjacent hairpins are snugly fitted together within the slot. To the contrary, a similar structure constructed with the round profile of traditional wires leave gaps between adjacent wires. A better fill factor results in greater efficiency as well as other benefits. For instance, better fill factors can translate into smaller stators and therefore smaller electric machines.

Hairpins can carry more current than round wires. When compared to traditional electric motors, electric motors with hairpin windings can use less energy to produce the same amount of power, which helps extend the vehicle's range. This better efficiency generates less heat in the winding and in the motor. This phenomenon simplifies temperature management and improves the reliability and lifespan of the electric motor.

In hairpin motors, hairpins include a protective varnish and/or coating. Like copper wires, copper hairpins are coated with a protective varnish (called insulating layer) that prevents the electric current from going in all directions when hairpins touch. Hairpin stators typically use one of the following varnishes: Polyamide-imides (PAI), Polyether ether ketone (PEEK), and Polyamide-imides with polyimide foil (PAI+FEP).

A hairpin stator is the defining part of a hairpin motor. During hairpin motor manufacturing, some general steps in the hairpin stator manufacturing process include some or all the following steps. The hairpin production process involves cutting and bending hairpin wire into a three-dimensional shape. This process can be done in one stage using CNC bending equipment or in multiple stages using a combination of die bending and swivel bending. The three main bending technologies for hairpin wires are: U-Pin where the wire is shaped like a U (most common), I-Pin where the wire is shaped like an I, and continuous hairpins (also called continuous wave) where a single wire is bent into a serpentine shape that can be several meters long.

The hairpin production process also involves welding. Here, the ends of the hairpin are welded to ensure that the electric flux is generated as needed. The quality of the welding process is important for the electric motor's performance.

The hairpin production process also involves stripping (e.g., laser stripping) the varnish at the end of the hairpin. This step is needed to be remove the varnish before welding so that the varnish does not contaminate the weld. Mechanical abrasion can be used, but laser stripping is more precise and consistent. There can also be an impregnation process where part of the stator is covered in a powder coating to protect exposed areas that have been welded.

For hairpin windings, the rectangular conductors are arranged into layers within each slot. To form a winding, connections between the conductors are made, which are defined by a winding scheme. While most connections in a hairpin winding layout are identical to reduce manufacturing cost, a small number of jumpers are needed when there are parallel branches. A typical hairpin winding includes a jumper with open slots, each extending inward from the edge of the jumper, forming a three-sided slot designed to receive a rectangular hairpin. The three-sided slot surrounds three sides of the hairpin but leaves the fourth side open. Since the fourth side is not enclosed, the jumper cannot self-support the hairpin, causing the hairpin to slip through the open slot. As a result, the jumpers must be fixtured during the welding process to hold the hairpins in place.

Electric machines have two leading types of winding patterns. One type of winding pattern that may be constructed is the fractional slot concentrated winding pattern (FSCW). Another type of winding pattern that can include the windings disclosed herein is an integral-slot distributed winding (ISDW) pattern. Typically, the Hairpin connection pattern belongs to latter (ISDW) The existing hairpin connection method is not capable of achieving the highest number of $n_{pp}= 2p$ parallel paths per phase, where $p$ is the pole-pair numbers. The existing hairpin connection method requires many more types of pins.

Described in more detail below, the present disclosure presents a unique connection arrangement to form a winding using hairpin technology with minimal changes in the basic hairpin geometry. Minimal modifications are made in a limited number of connections, leaving much of the hairpin geometry unaltered. Since the geometry is largely unmodified, the crown side formation of each hairpin remains simple and avoids needing sharp bending of the hairpin conductor during forming. Additionally, the bending and welding on the welding end is uniformed.

Further, the present disclosure presents a unique design method in the form of a unified diagonal hairpin connection method for all prevalent ISDW scenarios, relevant for potential applications in traction motors and generators. In an electric machine, there are an equal number of north and south magnets facing out from the rotor, and each set of $N$ and $S$ magnets is referred to as a pole pair. For each pole pair in the motor there are two poles, so if the motor has 8 poles / magnets, there are 4 pole pairs. Such connection methods can achieve a maximum number of $n_{pp}= 2p$ parallel paths per phase, where $p$ is the pole-pair numbers. Principles disclosed herein minimize the types of pins needed without being constrained by the number of hairpin layers. This means that such principles can be applied to electric machines with any desired hairpin layer numbers.

Now turning to the figures, FIG. 1 shows an example of a multi-mode hybrid vehicle system 200 as disclosed herein. The system 200 includes a plurality of motive power sources. For example, an integrated axle 202 is mechanically coupled with a steerable front axle 102A such that the integrated axle 202 is used as a motive power source to provide the motive force to drive the front wheels 120A using electrical energy provided form the energy storage 110. The rear axle 102B is mechanically coupled with the differential gears 116, which is mechanically coupled with the transmission 114, which is mechanically coupled with or decoupled from the engine 104 via the clutch 112. The rear axle 102B, therefore, is controlled using the motive force provided by the engine 104, another power motive source. For simplicity, the inverter(s) for the integrated axle 202 and the fuel reservoir 108 coupled with the engine 104 are not shown.

As disclosed herein, an "integrated axle" includes a type of electric axle drive that is affixed to the wheels to rotate them. In examples, the integrated axle combines the functionality of an electric motor-generator, power electronics such as an inverter, and in some examples a cooling circuit to reduce cost and increase efficiency in a single component. Integrated axles are neither directly nor indirectly coupled with any combustion engine, thereby using solely the motor-generator included therein to provide mechanical power to a drive axle coupled thereto.

In some examples, the motor-generator of the integrated axle may be mounted on the drive axle. In some embodiments, the integrated axle is configured to reduce interfaces and components that may induce efficiency loss. Examples of such components include wires and copper cables that link the components together, plugs, bearings for rotating components, and separate cooling circuits for the electric motor and power electronics. The integrated axles are also more compact than the electric motor, the power electronics, and the cooling circuits therefor being individually installed, thus saving installation space within the chassis frames of the vehicle and allowing more room therein. Each integrated axle is configured independently of other integrated axle(s) in the system. In some examples, the integrated axle may also include a two-speed or three-speed gearbox.

As shown in the embodiment of FIG. 1, the integrated axle 202 is mechanically coupled with a drive axle 102, such as the front axle 102A as shown in FIG. 1. The drive axle 102 is mechanically coupled with a pair of wheels 120, such as the pair of front wheels 120A as shown in FIG. 1. Although not shown, a controller is electrically coupled with the integrated axle 202. Based on the inputs received, the controller turns on (activates or engages) or turns off (deactivates or disengages) one or more of these components to achieve the different modes shown herein. FIG. 2 shows some of the components of the integrated axle 202. For example, the integrated axle 202 includes an electric motor-generator 300, a drive axle 302, and a transmission 304. Other components such as the aforementioned inverter and/or cooling circuit may be included in the integrated axle 202, as suitable. These components are separately or independently operable from the other components (*e.g.,* the transmission 304 is separately operable from the transmission 114). The components of the integrated axle 202 (e.g., the electric motor-generator and at least a portion of the drive axle, etc.) may be mechanically mated to, coupled to, affixed to, or implemented within a common housing 204. The housing may be any suitable structure which supports the positioning of the components, as well as to provide protection of the components.

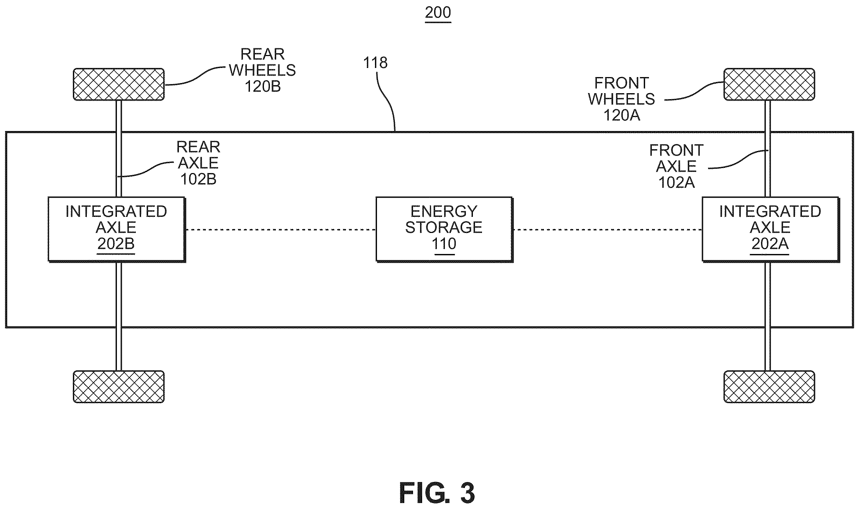

FIG. 3 shows an example of the system 200 which incorporates two integrated axles 202A and 202B, with one implemented for each of the front axle 102A and the rear axle 102B, respectively. The integrated axles 202A and 202B are operated using the controller (not shown) and the electrical energy for these axles are provided by a common energy storage 110, such as a battery or a battery pack. The two integrated axles 202A and 202B may be separately and independently operated so as to be implementable as two separate and distinct motive power sources. Each integrated axle may include the same components, including for example an electric motor and a transmission as explained herein, that are separately operable from each other, although they may be operable together simultaneously as well, as suitably controlled by the controller.

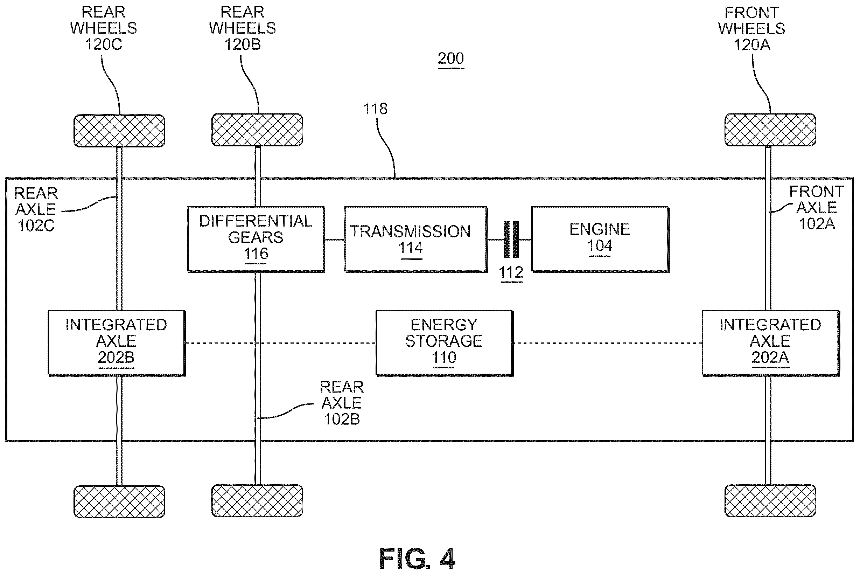

FIGS. 4 through 6 show examples of the system 200 where more than two axles (and in effect, more than four wheels) are implemented, with different combinations of integrated electrical axles and engine-powered axles implemented therein. It is to be understood that these figures are provided for illustrative purposes only, such that any additional number of axles may be implemented according to the need of the vehicle and its operation.

FIG. 4 shows an example of the system 200 which incorporates three axles 102A, 102B, and 102C, of which two of them, the front axle 102A and the rear axle 102C, have integrated axles 202A and 202B, respectively, coupled therewith. The other axle (rear axle) 102B is coupled with the engine 104 via the clutch 112, transmission 114, and differential gears 116 as shown. The integrated axles 202A and 202B are electrically powered by the energy storage 110.

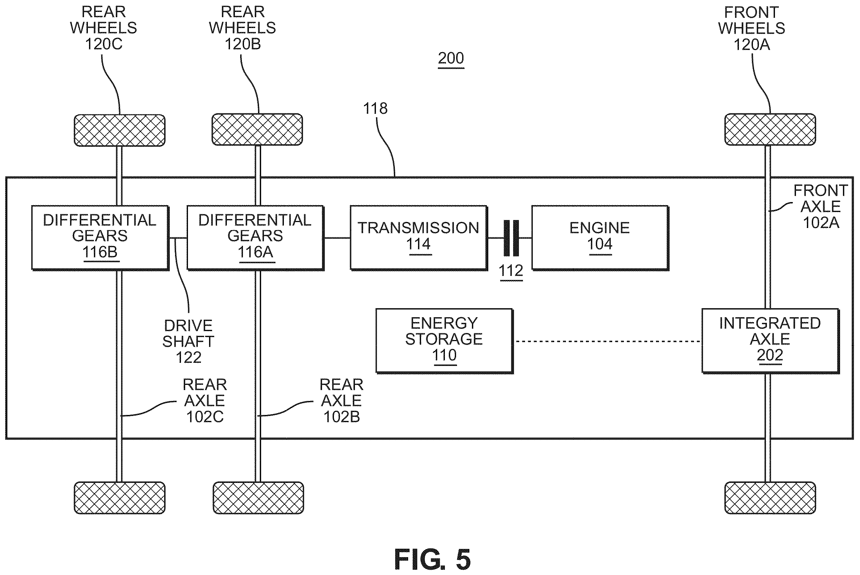

FIG. 5 shows an example of the system 200 with three axles 102A, 102B, and 102C, but instead of two integrated axles, only the front axle 102A is coupled with the integrated axle 202, and the two remaining rear axles 102B and 102C are coupled with differential gears 116A and 116B, respectively. The differential gears 116A and 116B are coupled with each other via the driveshaft 122 which may operate both of the gears simultaneously, using the power provided by the engine 104 and transferred through the transmission 114. As such, the rear axles 102B and 102C may be coupled with each other via the drift shaft 122.

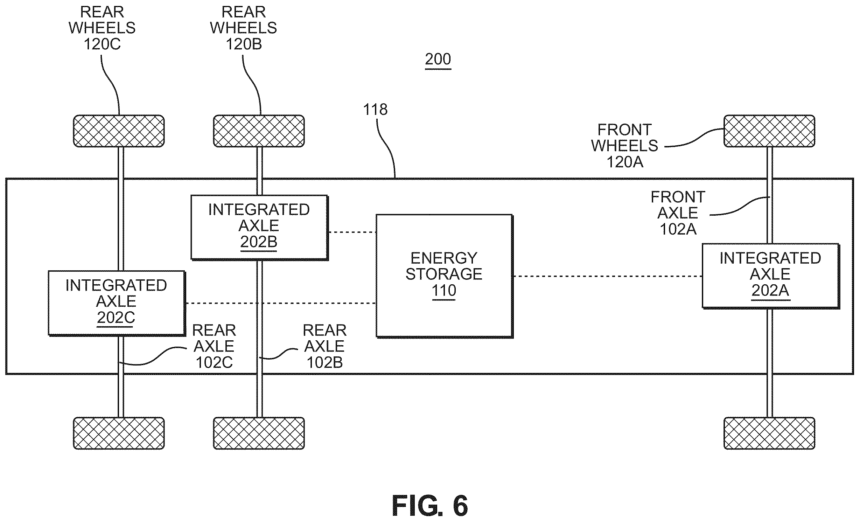

FIG. 6 shows an example of the system 200 with all three axles 102A, 102B, and 102C being powered electrically using the energy storage 110. That is, there are three integrated axles 202A, 202B, and 202C for the three axles, each independently operable, as controlled by a controller (not shown). In all examples disclosed herein, the front axle 102A is always implemented with an integrated axle, but the remaining axles may have integrated axles, engine-powered axles, or a combination of both.

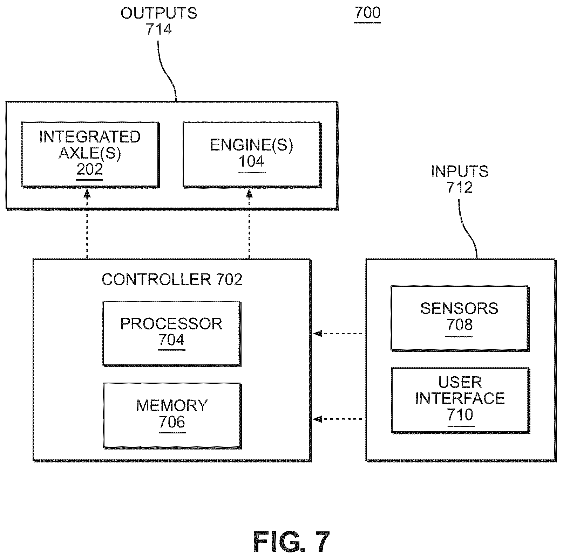

FIG. 7 shows an example of a control system 700 for the multi-mode hybrid vehicle system 200 as disclosed herein. The control system 700 includes a controller (multi-axle system controller) 702 which receives inputs 712 and controls the outputs 714. The controller 702 includes a processor 704 and a memory unit 706. The processor may be a microprocessor, a microcontroller, or any other suitable types of processing device or controller as known in the art. The controller 702 controls the operation of the integrated axle(s) 202 and engines 104 over communication lines, for example. It should be understood, however, that communication between controller and the integrated axle(s) and engine(s) may alternatively, or in addition, be performed wirelessly.

It should be understood that, in some embodiments, the controller 702 may form a portion of a processing subsystem including one or more computing devices having non-transient computer readable storage media, processors or processing circuits, and communication hardware. The controller 702 may be a single device or a distributed device, and the functions of the controller may be performed by hardware and/or by processing instructions stored on non-transient machine-readable storage media. Example processors include an application specific integrated circuit (ASIC), a field programmable gate array (FPGA), a digital signal processor (DSP), and a microprocessor including firmware. Example non-transient computer readable storage media includes random access memory (RAM), read only memory (ROM), flash memory, hard disk storage, electronically erasable and programmable ROM (EEPROM), electronically programmable ROM (EPROM), magnetic disk storage, and any other medium which can be used to carry or store processing instructions and data structures and which can be accessed by a general purpose or special purpose computer or other processing device.

Certain operations of the controller 702 described herein include operations to interpret and/or to determine one or more parameters. The parameters may be inputs 712 which may be information or data received from sensors 708 and/or user interface 710, among other means of providing inputs. The sensors may be any suitable sensor that can measure any change or increase in the load of the vehicle or the load applied on the vehicle. The sensors may include, but are not limited to, weight sensors which detect the physical weight of the vehicle and/or its cargo, gyroscopes which detect the incline or decline in which the vehicle may be traveling, and altimeters which detect the altitude or change in altitude as the vehicle travels, among others.

Interpreting or determining, as utilized herein, includes receiving sensor values by any method known in the art, including at least receiving values over communication lines, from a datalink, network communication or input device, receiving an electronic signal (e.g. a voltage, frequency, current, or pulse-width-modulation signal) indicative of the value, such as the current and expected loads of a vehicle as well as user's preference or whether the rear axles are approaching or reaching their performance limit, for example, as further explained herein, receiving a computer generated parameter indicative of the value, reading the value from a memory location on a non-transient machine readable storage medium, receiving the value as a run-time parameter by any means known in the art, and/or by receiving a value by which the interpreted parameter can be calculated, and/or by referencing a default value that is interpreted to be the parameter value.

The above-described embodiments of the technology described herein can be implemented in any of numerous ways. For example, the embodiments may be implemented using hardware, software or a combination thereof. When implemented in software, the software code (or software algorithm) can be executed on any suitable processor or collection of processors, whether provided in a single computing device or distributed among multiple computing devices. Such processors may be implemented as integrated circuits, with one or more processors in an integrated circuit component, including commercially available integrated circuit components known in the art by names such as CPU chips, GPU chips, microprocessor, microcontroller, or co-processor. Alternatively, a processor may be implemented in custom circuitry, such as an ASIC, or semicustom circuitry resulting from configuring a programmable logic device. As yet a further alternative, a processor may be a portion of a larger circuit or semiconductor device, whether commercially available, semi-custom or custom. As a specific example, some commercially available microprocessors have multiple cores such that one or a subset of those cores may constitute a processor. Though, a processor may be implemented using circuitry in any suitable format.

Further, it should be appreciated that a computing device may be embodied in any of several forms, such as a rack-mounted computer, a desktop computer, a laptop computer, or a tablet computer. Additionally, a computing device may be embedded in a device not generally regarded as a computing device but with suitable processing capabilities, including a Personal Digital Assistant (PDA), a smart phone or any other suitable portable or fixed electronic device.

Also, a computing device may have one or more input and output devices. These devices can be used, among other things, to present the user interface 710 (which may be an output device as well as an input device). Examples of output devices that can be used to provide a user interface include printers or display screens for visual presentation of output and speakers or other sound generating devices for audible presentation of output. Examples of input devices that can be used for a user interface include keyboards, and pointing devices, such as mice, touch pads, and digitizing tablets. As another example, a computing device may receive input information through speech recognition or in other audible format.

Such computing devices may be interconnected by one or more networks in any suitable form, including as a local area network, a controller area network, or a wide area network, such as an enterprise network or the Internet. Such networks may be based on any suitable technology and may operate according to any suitable protocol and may include wireless networks, wired networks or fiber optic networks.

Also, the various methods or processes outlined herein may be coded as software that is executable on one or more processors that employ any one of a variety of operating systems or platforms. Additionally, such software may be written using any of a number of suitable programming languages and/or programming or scripting tools, and also may be compiled as executable machine language code or intermediate code that is executed on a framework or virtual machine.

In this respect, the disclosed embodiments may be embodied as a computer readable storage medium (or multiple computer readable media) (e.g., a computer memory, one or more floppy discs, compact discs (CD), optical discs, digital video disks (DVD), magnetic tapes, flash memories, circuit configurations in Field Programmable Gate Arrays or other semiconductor devices, or other tangible computer storage medium) encoded with one or more programs that, when executed on one or more computers or other processors, perform methods that implement the various embodiments of the disclosure discussed herein. As is apparent from the foregoing examples, a computer readable storage medium may retain information for a sufficient time to provide computer-executable instructions in a non-transitory form. Such a computer readable storage medium or media can be transportable, such that the program or programs stored thereon can be loaded onto one or more different computers or other processors to implement various aspects of the present disclosure as discussed above. As used herein, the term "computer-readable storage medium" encompasses only a non-transitory computer-readable medium that can be considered to be a manufacture (i.e., article of manufacture) or a machine. Alternatively, or additionally, the disclosure may be embodied as a computer readable medium other than a computer-readable storage medium, such as a propagating signal.

The terms "program" or "software" are used herein in a generic sense to refer to any type of computer code or set of computer-executable instructions that can be employed to program a computing device or other processor to implement various aspects of the present disclosure as discussed above. Additionally, it should be appreciated that according to one aspect of the disclosure, one or more computer programs that when executed perform methods of the present disclosure need not reside on a single computer or processor but may be distributed in a modular fashion amongst a number of different computers or processors to implement various aspects of the present disclosure.

Computer-executable instructions may be in many forms, such as program modules, executed by one or more computers or other devices. Generally, program modules include routines, programs, objects, components, data structures, etc. that perform particular tasks or implement particular abstract data types. Typically, the functionality of the program modules may be combined or distributed as desired in various embodiments.

Also, data structures may be stored in computer-readable media in any suitable form. For simplicity of illustration, data structures may be shown to have fields that are related through location in the data structure. Such relationships may likewise be achieved by assigning storage for the fields with locations in a computer-readable medium that conveys relationship between the fields. However, any suitable mechanism may be used to establish a relationship between information in fields of a data structure, including through the use of pointers, tags or other mechanisms that establish relationship between data elements.

The following discussion involved equations that will use nomenclature in TABLE 1 provided below.

TABLE 1: Nomenclature

| Symbol | Definition |
|---|---|
| $N$ | number of slots |
| $m$ | number of phases (i.e., phase numbers) |
| $\gamma$ | number of wound coils per phase |
| $t$ | greatest common divider between $N$ and $p$ |
| $p$ | Pole-pair numbers (i.e., number of pole pairs) |
| $q$ | Slot number per pole per phase (i.e., number of phasors or number of wound slots per pole per phase) |
| $y_p$ | pole pitch in slot numbers |
| $y_n$ | Hairpin winding slot pitch in slot numbers |
| $n_L$ | Number of hairpin layers in the slot |
| $n_{total}$ | Total number of conductors of an electric machine |
| $n_{pp}$ | Number of parallel paths per phase |
| $n_{pp\_max}$ | Maximum number of parallel paths per phase |
| $n_{conds}$ | Number of conductors of each parallel pat |
| $n_{conds\_min}$ | Minimum number of conductors of each parallel path |

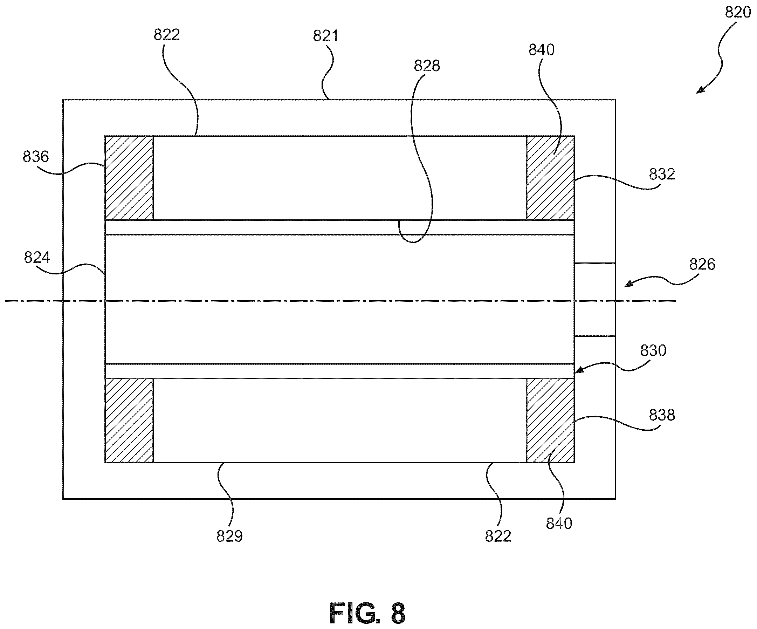

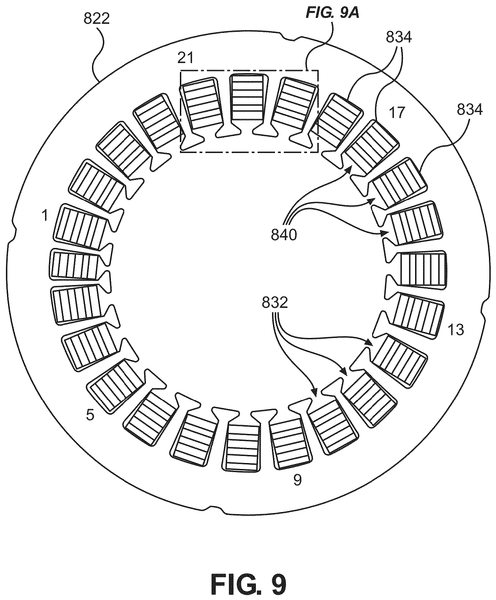

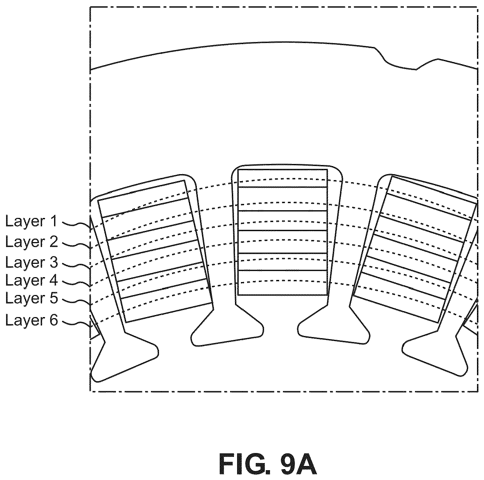

FIGS. 8 and 9 show various detailed aspects of an electric machine 820. In particular, FIG. 8 shows is a schematic diagram of an electric machine 820. FIG. 9 shows a perspective view of a stator of the electric machine 820. Note that while these figures illustrate a certain configuration (*e.g.,* number of slots, poles, etc.), this disclosure should not be limited to such. In fact, the electric machine 820 shown in these figures is just one example of many disclosed herein as will be further evidenced by discussion of other configurations thereafter.

An electric machine 820 such as the one illustrated here may be used in a vehicle such as a fully electric vehicle or a hybrid-electric vehicle. The electric machine 820 may be referred to as an electric motor, a traction motor, a generator, or the like. The electric machine 820 may be a permanent magnet machine, an induction machine, or the like. In the illustrated embodiment, the electric machine 820 is a three-phase alternating current (AC) machine. The electric machine 820 is capable of acting as both a motor to propel the vehicle and as a generator such as during regenerative braking. While described in the context of an electrified vehicle, the electric machine 820 may also be used in nonautomotive applications. For example, the electric machine 820 may be used in manufacturing equipment or in power-generation machines.

Three-phase electric machines 820 are a common type of electric machine 820. The most basic three-phase brushless electric machine 820 is a 2-pole 3-slot electric machine 820. There are various configurations of electric machines 820 with different combinations of poles and slots, such as 4-pole 3-slot, 4-pole 6-slot, and 16-pole 12-slot. When the number of poles and the number of slots increases, a large torque can be obtained, and the torque pulsation also decreases. As it relates to terminology, the pole number represents the number of magnet poles for the rotating rotor, and an electric machine 820 with one pair of North and South poles is called a two-pole electric machine 820. The number of poles can be 2, 4, 6, 8, etc. The phase represents the number of independent coils for fixed stators. A three-phase symmetric electric machine 820 is an electric machine 820 with three independent coils at 120 electric degree intervals. The traction battery may be electrically connected to one or more power electronics modules. The power electronics modules may be electrically connected to the electric machines 820 and may provide the ability to bi-directionally transfer electrical energy between the traction battery and the electric machine 820. For example, a suitable traction battery may provide a DC voltage while the electric machine 820 may require a three-phase AC voltage. The power electronics module may include an inverter that converts the DC voltage to a three-phase AC voltage as required by the electric machine 820. In a regenerative mode, the power electronics module may convert the three-phase AC voltage from the electric machine 820 acting as a generator to the DC voltage required by the traction battery.

The electric machine 820 includes a housing 821 that encloses the stator 822 (or stator core 822) and the rotor 824. The stator 822 is fixed to the housing 821 and includes a cylindrical stator core 822 having an inner diameter 828 (ID 828) that defines a hole 830 and an outer diameter 829 (OD 829). The stator core 822 may be formed from a plurality of stacked laminations. The rotor 824 is supported for rotation within the hole 830. The rotor 824 may include windings or permanent magnets that interact with windings of the stator 822 to generate rotation of the rotor 824 when the electric machine 820 is energized. The rotor 824 may be supported on a bearing 826 that extends through the housing 821. The rotor 824 is configured to couple with a drivetrain of the vehicle to output torque for vehicle propulsion or receive mechanical regenerative energy from vehicle motion.

The stator core 822 defines circumferentially arranged slots 832 around the stator core 822 and extending outward from the inner diameter 828. The slots 832 may be equally spaced around the circumference. As shown, the stator core 822 defines twenty-four slots and has eight poles (or 4 pole pairs). In examples, the stator core 822 may include more or fewer slots and/or poles. For example, the stator core 822 may define seventy-two slots and have eight poles (or 4 pole pairs).

One skilled in the art will appreciate this motor with different components, representing parts such as the rotor, stator, and other internal sections. Arrows can indicate a direction of flow, which likely corresponds to the movement of energy or the path of current within the motor. Certain areas emphasize the interactions between the motor's magnetic fields, electrical currents, and mechanical components, providing a visual representation of how these elements work together in the motor's operation. In comparison, two types of motor windings: round wire winding and hairpin winding. Round wire winding involves using copper wire that is wound in a circular shape. In contrast, hairpin winding uses pre-formed copper conductors shaped like hairpins. The hairpin design allows for a more compact and efficient use of space, which is especially beneficial for applications requiring higher currents and improved performance. The image highlights the difference in construction between the two winding methods, demonstrating how hairpin windings can enhance the motor's overall efficiency and power handling capacity.

The slots 832 are spaced by a circumferential distance measured between the center lines of two adjacent slots. This distance can be used as a unit of distance (hereinafter "a slot") for relating to, and measuring, other components of the stator 822. The distance unit "slot" is also sometimes used in specifying the "slot pitch" or "slot span." The slots 832 are also referenced by numbers 1 through 24 in the counterclockwise direction with the odd number slots being labeled for convenience. The slots may be characterized as odd slots (i.e., slots 1, 3, 5, etc.) and even slots (i.e., slots 2, 4, 6, etc.). The odd and even designation is for ease of description in explaining the arrangement of the windings 840, and the structure of odd and even slots may be the same.

Stator core 822 may be formed out of a stack of laminations and defines a plurality of slots 832. Windings 840 include axially extending segments 834 that are disposed within slots 832. Axially extending slots 832 circumscribe a hole 830 or central opening 830 of stator core 822.

The illustrated embodiment is a three-phase electric machine 820 with six turns.

One parameter that may be used to describe a winding arrangement is slots per pole per phase. This is equal to the number of slots per pole in each slot group of the winding 840 if each such slot were filled solely by windings of one phase.

To avoid or minimize a re-circulating current in the winding 840, it is desirable for the winding 840 to be electrically balanced this is particularly true for a winding 840 having a plurality of wires connected in parallel. As noted above, hairpin winding 840 configurations can improve efficiency for electric machines used in vehicles as well as other applications. The electric machine 820 includes hairpin windings 840 routed through the slots 832 of the stator core 822. The hairpin windings 840 improve efficiency by providing a greater amount of stator conductors to reduce resistance of the winding 840 without encroaching into space reserved for the electrical steel and the magnetic flux path. The hairpin windings 840 may be arranged as wave windings in which the windings 840 weave from pole to pole in a wave-like pattern.

A particular challenge with hairpin winding 840 is matching the electric machine design to the desired torque-speed curve. An important step in configuring an electric machine 820 is selecting the phase turn number so that the torque-speed curve covers all required operating points. For conventional stranded windings made of long wires connected in parallel, the desired phase turn number is selected by choosing the number of turns per coil, the number of parallel paths, the number of poles, the number of slots per pole, and the number of layers. While such arrangements may also be available for hairpin windings 840, the limiting factors are very different for pre-formed hairpins, thus resulting in smaller range of feasible choices. More specifically, while the possible number of poles, slots per pole, and layers can be the same between the two technologies, it is not practical using a hairpin winding 840 to have as many turns per coil as in a stranded winding 840. Each hairpin needs to be connected to the next hairpin by welding, soldering or other suitable electrical connection, and needs to be bent according to a specific shape to make the connection possible. This limits the number and size of the conductors that can be within a single slot. An additional challenge is creating parallel branches within each phase that are balanced (*e.g.*, not causing large circulating currents in the loop formed by the parallel circuits due do dissymmetry) and have reasonably complex connections.

The hairpins are installed in the stator core 822 by inserting the legs through corresponding ones of the slots 832. All the hairpins may be installed from the same end of the stator core 822, *e.g.*, end 836, so that all the crowns are located on one end of the stator, *e.g.*, end 836, and the ends of the legs are located on the other end, *e.g.*, end 838. Once installed, the legs of the hairpins are bent away from each other to form twists that connect with the twists of other hairpins. The ends of corresponding hairpins are joined by a connection such as a weld. The connections may be arranged in rows. End 836 may be referred to as the crown end and end 838 may be referred to as the weld end. Each path includes associated hairpins that are connected, *e.g.*, welded, at ends of the twists to form a continuous conductive conduit between a terminal and a neutral connection. Some hairpins may be spaced too far apart to be directly joined and may require an electrical bridge, *e.g.*, a jumper, to interconnect those hairpins and complete the path.

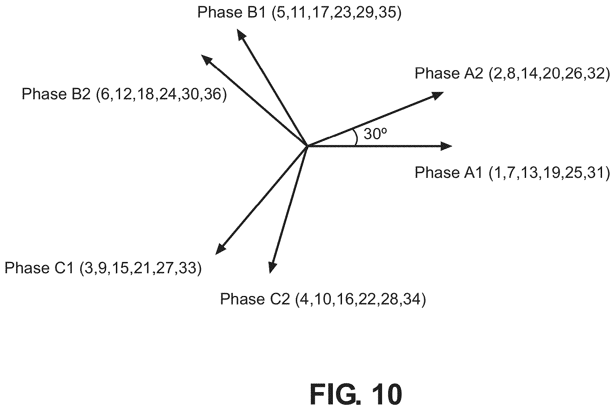

FIG. 10 is a coil phasor diagram of a 36 slots 6 poles electric machine with full-pitch winding. A coil phasor is a quantity which has magnitude, direction and time relationship. Phasors are used to represent sinusoidal voltages and currents by plotting on rectangular coordinates. If the phasors were allowed to rotate about the origin, and a plot made of ordinates against rotation time, the instantaneous sinusoidal wave form would be represented by the phasor.

Phasor diagrams, at their essence, project a rotating vector onto a horizontal axis to represent its instantaneous value. These diagrams can be drawn to depict any angle or moment in time, and are exclusively applicable to sinusoidal AC alternating quantities. Phasor diagrams can represent multiple stationary sinusoidal quantities at any given instant, with the reference phasor typically drawn along the horizontal axis. All phasors are referenced to the horizontal zero axis and rotate in an anticlockwise direction. Phasors ahead of the reference phasor are considered leading while those behind are lagging. The length of a phasor generally represents the rms value of the sinusoidal quantity rather than its maximum value. In a three-phase balanced system, each phasor is displaced by 120 degrees.

The 36 slots 6 poles electric machine with full-pitch winding is a type of electric motor that uses a specific configuration of slots and poles to generate rotational motion. The motor has 36 slots, which are evenly spaced around the circumference of the motor. These slots are used to hold the motor's winding, which is made up of a series of coils of wire.

The motor also has 6 poles, which are arranged in a circular pattern around the center of the motor. These poles are made up of magnetic material and are used to create a magnetic field that interacts with the motor's winding to generate rotational motion. The full-pitch winding configuration means that each coil of wire in the winding spans the full distance between two adjacent poles, which maximizes the motor's winding factor. When an electrical current is applied to the motor's winding, it creates a rotating magnetic field that interacts with rotor magnetic field, causing the motor to rotate.

The electric machine 820 may be a three-phase electric machine in which the hairpin windings 840 are arranged in an A phase, a B phase, and a C phase. In the examples of the present disclosure, each phase includes a plurality of individual hairpin conductors arranged in parallel winding paths.

The proposed winding distribution procedure (or winding pattern or scheme) is represented below in a Winding Distribution Table (WDT), which allows the assignment of a specific stator slot to a winding phase section. Hereafter the basic rules to determine the WDT are defined.

The method features each parallel path implementing layer changes prior to phasor changes, which are achieved using a singular type of normal hairpin (with a winding slot pitch of $y_n$) and welding sidePhasor changes, on the other hand, are realized by jumpers with slot pitch of $y_n \pm k$, where k is an integer. The phasor changes happen either on the innermost or outmost layer. The normal hairpin always spans different layers in different slots, while the jumper always spans in the same layers in different slots. Ultimately, this contribution is anticipated to propel the evolution of more adaptable and versatile hairpin winding designs catering to the demands of high-power, high-speed electrical machines.

Maximum number of parallel paths per phase is $n_{pp} = 2p$. The number of phasors of a phase in an electric machine equals to $q$, as illustrated in the figure. Considering the influence of number of layers $n_L$ and number of $q$ on the conductor's inductance and flux linkage, to achieve a symmetric design where there is no circulating current between parallel paths, the minimum number of conductors of each parallel path can be determined through Equation (1).

$$n_{conds_{min}} = q * n_L)$$

The total number of conductors of an electric machine can be written in Equation (2).

$$n_{total} = m * n_L * q * 2 * p \qquad (2)$$

Thus, to achieve a symmetric design where there is no circulating current between parallel paths, the maximum number of parallel paths per phase that can be achieved is $2p$, as computed in Equation (3), which is the same as in the conventional lap winding case.

$$n_{pp\_\max} = \frac{n_{total}}{m*n_{\text{conds\_min}}} = \frac{n_L*q*2*p}{q*n_L} = 2p \qquad (3)$$

All the winding layout cases discussed above are with full pitch to highlight basic design rules. Nevertheless, short-pitch windings are widely adopted for traction motors with the benefit of reduced armature reaction magnetomotive force (MMF) harmonics.

Figures that follow illustrate principles of the present disclosure in more detail for the winding schemes across three scenarios, namely, Scenarios 1-3. Hereinafter is discussion of these scenarios. Scenario 1 is for a 36-slot, 6-pole electric machine with full-and short-pitch windings where $p>q, p=3, q=2$. Scenario 2 is for a 54-slot, 6-pole electric machine with full-pitch winding where $p=q, p=3, q=3$. Scenario 3 is for a 72-slot, 6-pole electric machine with full-pitch winding where $p<q, p=3, q=4$.

Principles of the present disclosure can be applied to multiple multiphase (e.g., three-phase) windings with or without angle shift. Different winding arrangements are typically suited for different applications. When an electric machine with higher efficiency and lower noise is desired, it is often desirable to have the phase belt of the stator winding to be half-full-half. For example, for a stator having two slots per pole per phase, the phase belt would be 4-8-4 (four wires in the left slot, eight wires in the middle slot and four wires in the right slot). This is also sometimes referred to as short-pitch winding or phase shifted winding. However, forming a winding arrangement with a half-full-half phase belt can be challenging from design perspective. For instance, all the paths of the winding arrangement must be properly connected with advantageous winding features that result in the desired performance characteristics for the electric machine.

Examples of three common slot-pole combinations, including 36-slot 6-pole ($p>q, p=3, q=2$), 54-slot 6-pole ($p=q, p=3, q=3$), and 72-slot 6-pole ($p<q, p=3, q=4$), are provided to demonstrate the winding scheme (or connection rule). As can be observed from these examples, in combination with the rest of this disclosure, the present disclosure culminates in a unified design paradigm and approach alongside alternate hairpin connection methodologies. This unification underscores that the lap and wave winding are essentially the same, and the main difference between them is the manner of connecting the winding coil on each end.

Three scenarios are considered hereinafter at length in connection with forthcoming figures. In Scenario 1, $p>q$, $p=3, q=2$ for an electric machine including 36 slots and 6 poles. Scenario 1 has various aspects (e.g., Scenarios 1a-1d corresponding respectively to first through fourth implementations), which are discussed in more detail below. In Scenario 2, $p=q, p=3, q=3$ for an electric machine including 54 slots and 6 poles with full-pitch winding. In Scenario 3, $p<q, p=3, q=4$ for an electric machine including 72 slots 6 poles machine with full-pitch winding.

Across all aspects of Scenario 1, $p>q, p=3, q=2$ for electric machines with either full- or short-pitch windings. In Scenario 1a, there is a 36-slot, 6-pole electric machine with full-pitch winding. Here there are 3 pole pairs ($p=3$) such that $n_{pp}=2*3=6$; the number of phasors is $m=36/6=6$; and the number of phasors per phase is $q=6/3=2$. In Scenario 1b, similar to Scenario 1a, there is a 36-slot, 6-pole electric machine with full-pitch winding but $n_{pp}=2p/2=3$. In Scenario 1c, similar to Scenarios 1a and 1b, there is a 36-slot, 6-pole electric machine with full-pitch winding but $n_{pp}=2p/3=2$. In Scenario 1d, similar to Scenarios 1a-1c, there is a 36-slot, 6-pole electric machine with short-pitch winding to demonstrate the basic rule from full-pitch winding design can be easily applied to their short-pitch winding counterpart.

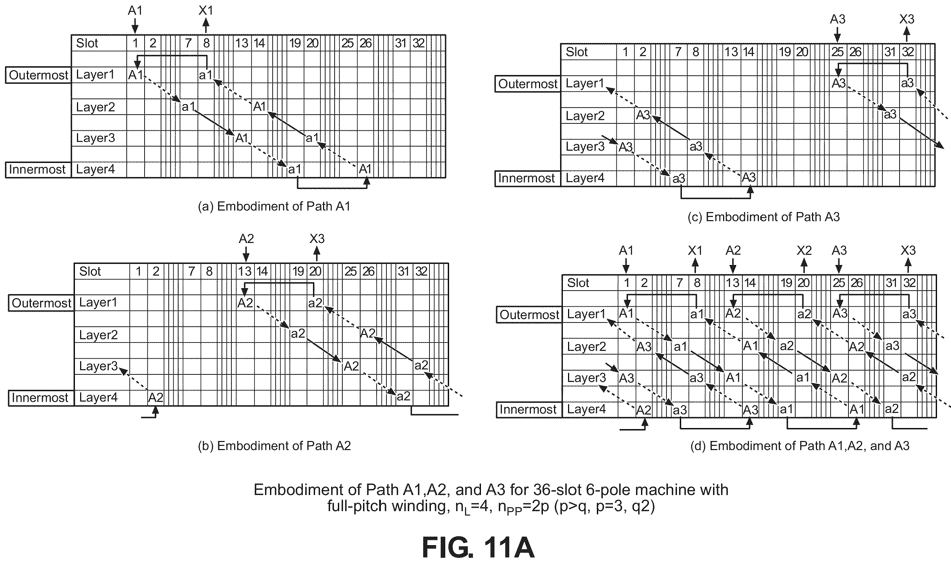

Various aspects of Scenario 1 can be seen in FIGS. 11A, 11B, and 12. FIG. 11A is a diagram for a winding scheme with diagonal hairpin winding for a 36-slot, 6-pole electric machine with full-pitch winding in a first Scenario 1 implementation. FIG. 11B is a diagram for a winding scheme with diagonal hairpin winding for a 36-slot, 6-pole electric machine with full-pitch winding. In these diagrams, solid lines with mid arrows indicate normal hairpins with a slot pitch of $y_n$; dashed line with mid arrows indicate welding side hairpins with slot pitch of $(2y_p-y_n)$; and u-shaped connecters with dotted ends indicate jumpers (e.g., on either of the outermost and innermost layers). The diagrams show four hairpin layers (layers 1-4) on the righthand side, slot number at the bottom, and polarity at the top. The number of poles (here there are 6) corresponds to the number of winding paths (A1-A6), and a separate diagram is used for each of the winding paths for clarity. FIG. 12 is a diagram showing illustrations of pins and jumpers being assembled and arranged within a stator core in 3-D fashion for the electric machine in FIGS. 11A and 11B.

The leading rule in the method provides that each parallel path must span all slots per pole per phase, encompassing all layers, while maintaining an equal number of conductors as the other paths, irrespective of slot position. Each path can start from either the innermost or outermost layer. Ultimately, the proposed hairpin winding connection method is not affected by the number of hairpin layers Each path implements the layer changes prior to phasor changes, which are effectuated on the innermost or outermost layer as dictated by the situation. Layer changes are achieved using a singular type of normal hairpin (with a winding slot pitch of $y_n$) and welding side. Phasor changes are realized by the jumpers with slot pitch of $y_n \pm k$, where k is an integer. The phasor changes happen either on the innermost or outmost layer. The two pins of a normal hairpin sit at different layers at different slots while the two pins of a jumper sit at the same layer at different slots. The welding side embodies a uniform arrangement, with a winding slot pitch of $2*y_p-y_n$,

where is $y_p$ the pole pitch. The maximum number of parallel paths per phase $n_{pp\_max}$ can be achieved is 2p.

FIG. 13 shows a diagonal hairpin winding scheme for an electric machine that includes 36 slots and 6 poles with full-pitch winding such that $n_{pp}$=2p/**2**, $p$>$q$, $p$=3, and $q$=2. This figure shows two distinct winding techniques: the first method incorporates an in-series connection on the outermost layer, while the second method involves implementing the in-series connection on the innermost layer.

Further to Scenario 1, in a second Scenario 1 implementation, $n_{pp}$=2$p$/2=3. Based on a first Scenario 1 implementation where $n_{pp}$=2$p$, connecting two parallel paths in the first Scenario 1 implementation in series can reduce the number of parallel paths by two. Using the in-series connection between Path A1 and Path A6 as an example, a new path can be realized in different ways, namely two distinct methods.

The first method involves implementing the in-series connection on the outermost layer. Such a winding scheme can utilize the terminal pin located at (layer 1, slot 1) as the start for the new path. By establishing a connection between terminal X1 at (layer 1, slot 8) in FIG. 11A (a) and the conductor at (layer 1, slot 14) within Path A6 shown in FIG. 11B (f), a shorter jumper is required with a winding slot pitch of $y_n$ on the outermost layer, as in FIG. 11A (a). Ultimately, the end of this new path occurs at the terminal pin situated at (layer 1, slot 7), as in FIG. 13 (a).

The second method involves implementing the in-series connection on the innermost layer. Again, the terminal pin located at (layer 1, slot 1) can be used as the start for the new path. A connection between terminal X1 (layer 4, slot 19) in FIG. 11A (a) and the conductor at (layer 4, slot 25) within Path A6 in FIG. 11B (f) is established using a shorter jumper with slot pitch of $y_n$, as illustrated in FIG. 13(b). Subsequently, between slot 32 and slot 26, another shorter jumper with a winding slot pitch of $y_n$ on the innermost layer is introduced. Finally, the end of this new path occurs at the terminal pin situated at (layer 1, slot 8), as in FIG. 13(b).

FIG. 14 shows a diagonal hairpin winding scheme for an electric machine that includes 36 slots, 6 poles with full-pitch winding, $n_{pp}$=2$p$/3 such that $p$>$q$, $p$=3, and q=2.

Further to Scenario 1, in a third Scenario 1 implementation, $n_{pp}$=2$p$/3 = 2. Based on the first Scenario 1 implementation where $n_{pp}$=2$p$, connecting any three parallel paths in the first Scenario 1 implementation in-series can reduce the number of parallel paths by three. For instance, Path A1-A3 in the first Scenario 1 implementation can be connected in series through two shorter jumpers to form a new path; similarly, Path A4-A6 in the first Scenario 1 implementation can be in-series connected through two shorter jumpers to form another new path. It is worth noting that for $p$=3 (6-pole machine), $n_{pp}$=2$p$/3=2 is an integer, so it is applicable. However, it is not applicable when $p$=4 (8-pole machine).

FIG. 15 shows an example layout for an electric machine that includes 36 slots and 6 poles in full- and short-pitch windings where $p$>$q$, $p$=3, and q=2. FIG. 16 shows a diagram of a diagonal hairpin winding scheme of an electric machine that includes 36 slots and 6 poles with short-pitch winding where npp=2p, $p$>$q$, $p$=3, $q$=2.

Here, a trio of electrical phases propelling the electric machine is denoted as {A B C}. To represent the windings of these phases, {A a B b C c} are used, where uppercase letters indicate clockwise (CW) windings and lowercase letters indicate anticlockwise (ACW) windings. Each letter will be assigned a distinct color, with A and a in red, B and b in green, and C and c in blue. Therefore, an electric machine configuration with 6 CW windings (with u = 2 and z = 1) can be expressed as ABCABC or more concisely as (ABC)[2]. Table 2 provides recommended winding patterns in a WDT that can achieve higher winding factor and so the higher torque output. The remaining winding patterns listed above can be easily justified through symmetry arguments on a case-by-case basis.

Further to Scenario 1, in a short-pitch winding motor, an electric machine includes 36 slots and 6 poles such that $p$>$q$, $p$=3, and $q$=2. For short-pitch winding, the connection concept is similar. The difference is that due to the short-pitch, the slot pitch of welding side and normal hairpin are different; For a k slots short-pitched winding, the winding slot pitch of welding side is $y_n$= $y_p$-k, and the normal hairpin's winding pitch is $y_n$= $y_p$+$k$. For a 36-slot, 6-pole machine with 1 ($k$=1) slot short-pitched winding, an example of proposed diagonal hairpin winding connection that can achieve the maximum number of parallel paths per phase (i.e., 2p) is shown where only Path A1 and Path A4 are depicted. The connection of Path A2 & A3 are similar to Path A1 and the connection of Path A5 & A6 are similar to Path A4, respectively; and the difference is that they start from different pole-pairs. Similarly, the fewer parallel path numbers per phase can be easily achieved by connecting two or three of paths in series.

FIGS. 17A and 18A show a different scenario, Scenario 2, is presented in which an electric machine has 54 slots and 6 poles where $p$=$q$=3 with full-pitch winding. Similarly, the proposed diagonal hairpin winding connection rule for a 54-slot, 6-pole machine with full-pitch winding can be illustrated. Here, $y_n$= $y_p$=9 and $n_{pp}$=6 or 2$p$ ($p$=3, $p$=3, $q$=3). The connection rule is similar: the slot pitch of both normal hairpin and welding side are 9, i.e., $y_n$= $y_p$=9. For the value $q$=3, there are three phasors each phase and two phasor changes are required. To keep a consistent jumper, all parallel paths should start from the 1st phasor, and then do phasor change to 2nd and then 3rd phasor, or they can start from the 3rd phasor, and then do phasor change to the 2nd phasor and then to the 1st phasor.

FIGS. 17B and 18B show yet another different scenario, Scenario 3, of an electric machine that includes 72 slots and 6-poles where $p$<$q$, $p$=3, $q$=4 with full-pitch winding. Here, $y_n$=6, $n_{pp}$=6 or 2$p$ ($p$<$q$, $p$=3, $q$=4). The diagrams in these figure show that the diagonal hairpin winding connection rule can be extended to a 72-slot, 6-pole electric machine with full-pitch winding.

This figure illustrates the proposed diagonal hairpin winding configuration for a 54-slot, 6-pole electric machine with full-pitch winding. The diagram shows the winding paths (Path A1, A2, A3, A4, A5, A6) for the motor, each path corresponding to different phases of the winding. The winding paths are color-coded for clarity: red for Path A1, green for Path A2, blue for Path A4, purple for Path A5, yellow for Path A6, and other paths are designated by their respective colors.

The slots are labeled sequentially, and each path includes jumpers connecting specific slots to ensure proper phase alignment. The jumpers are indicated by dashed lines and are shown in different slots, with the notation "Jumper 2 ($y_n$+1) slots" representing the distance between connections. The figure breaks down the winding process into segments, showing how the paths traverse through the slots, ensuring the motor's phases are correctly wired.

The winding configuration uses a "full-pitch" design with parameters set as $y_n = 6$, $n_{pp} = 6$, $p = 3$, and $q = 3$, which represents a 6-pole, 54-slot machine. This proposed winding approach is designed to optimize the motor's efficiency, phase alignment, and overall performance by utilizing diagonal connections and specific jumper placements across the slots.

As noted above, the unified connection method is applicable to all prevalent ISDW scenarios, relevant for potential applications in traction motors. These scenarios have been succinctly documented in the WDT shown below in TABLE 2. The table does not include the ISDW scenarios with slots number higher than 96 slots; However, the unified connection method applied to them as well.

TABLE 2: SUMMARY OF POSSIBLE NUMBER OF PARALLEL PATHS PER PHASE FOR PREVALENT ISDW SLOT-POLE COMBINATIONS

| | | | Pole numbers | | | | | |
|---|---|---|---|---|---|---|---|---|
| | | | 2 poles | 4 poles | 6 poles | 8 poles | 10 poles | 12 poles |
| Slot numbers | | 36 | 1, 2 | 1, 2, 4 | 1, 2, 3, 6 | | | 1, 2, 3, 4, 6, 12 |
| | | 48 | 1, 2 | 1, 2, 4 | | 1, 2, 4, 8 | | |
| | | 54 | 1, 2 | | 1, 2, 3, 6 | | 1, 2, 5, 10 | |
| | | 60 | 1, 2 | 1, 2, 4 | | | | |
| | | 72 | 1, 2 | 1, 2, 4 | 1, 2, 3, 6 | 1, 2, 4, 8 | | 1, 2, 3, 4, 6, 12 |
| | | 96 | 1, 2 | 1, 2, 4 | | 1, 2, 4, 8 | | |

The following discussion is a summary of applicable slot-pole combinations. Advantageously, the proposed connection approach remains agnostic to the number of hairpin layers. All this, in turn, underscores the unification of design principles and theories encompassing both hairpin and lap winding methodologies. The implementation of symmetric multiple three-phase windings within the proposed hairpin winding method is obvious, attributing to the absence of phase shifts among parallel paths per phase. Asymmetric multiple three-phase winding, e.g., dual 3-phase with 30-degree shift, is usually not preferred in ISDW motor due to harmonic current issues. If an asymmetric multiple three-phase winding with hairpin is indeed required, one can obtain it easily by separating the q phasors within each phase belt into q phase groups based on the phasor diagram; and then assign these q phase groups to q three-phase windings ; each three-phase winding would occupy only a phasor group and so the number of three-phase winding set would be q and the shift angle between the multiple three-phase winding would be the same as the shift angle between the phasors within each phase belt, which can be calculated as (p*360/Q) in electric degrees..

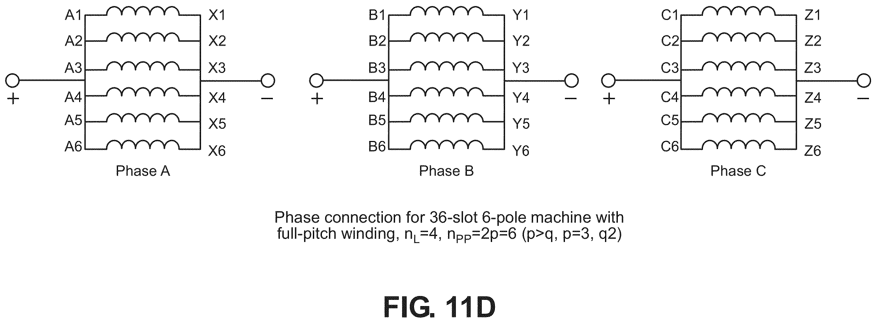

FIG. 19 shows a modification to the unified diagonal hairpin winding in Fig.11 scheme using a Flyer Jumper concept. FIG. 20 shows diagrams for an electric machine that includes 36 slots and 6 poles with full-pitch winding (similar to Scenario 1a where $n_{pp}=2p=6$) using the Flyer Jumper concept.

In yet another aspect of principles of the present discussion, there is another modification to the winding scheme. In essence, whereas in previous discussion there were jumpers with pins situated within the same layer, this aspect provides a flyer jumper with pins situated within the distinct layers. As noted above, to achieve balance between all the parallel paths, the phasor change is required. In the previous wiring scheme, it relies on the jumpers with pins situated within the same layer. However, it is noteworthy that these two pins have the potential to occupy distinct layers. It should be noted that one skilled in the art will appreciate that both these aspects may be employed in examples.

Revisiting Scenario 1 under these circumstances, the electric machine has $p>q$, $p=3$, $q=2$ in a 36 slot 6-pole full-pitch winding. In a first implementation of the revised Scenario 1, $n_{pp}=2p=6$. If a phasor change from the conductor of (layer 4, slot 19) to the conductor of (layer 1, slot 26) is desired, it is still feasible. It requires a jumper with slot pitch of $y_p+1$ spans across different slots between innermost and outermost layer, which defined as "Fly Jumper." Afterward, the connection follows exactly the same pattern as the connection before phasor change, and it ends at terminal X1 (layer 4, slot 8), as (a).

The 3-D model of Path A1 as well as the whole model can be seen in Fig 20 (h). As can be seen, all the jumpers follow the same pattern and there is no intersection among the jumpers.

FIG. 21 shows a 3D model of the 96-slot, 8-pole electric machine with short-pitch winding. The electric machine is a three-phase electric machine with 8 parallel paths per phase where $n_{pp}=2p=8$ such that $p=q=4$. As shown, this electric machine has 6 hairpin layers. A comprehensive 3D model, prominently featuring three-phase terminals in red, green, and blue, jumpers in yellow, standard hairpins earmarked for layer transitions in gold. The positions of the terminals can be repositioned based on the design preferences of the busbar.

FIG. 22 illustrates the embodiment of various winding paths for a 72-slot, 6-pole electric machine with full-pitch winding. It shows three different configurations of the winding paths labeled as Path A1, A2, A3, A4, A5, and A6, with each configuration presented in separate subfigures.

Part (a) shows the embodiment of Path A1, A2, and A3. The diagram represents the winding arrangement across the four layers of the stator, with paths marked as A1, A2, and A3 arranged in sequence across the slots. The paths are connected across the layers, and arrows indicate the movement of the winding paths through the slots.

Part (b) illustrates the embodiment of Path A4, A5, and A6. Similar to part (a), the winding paths (A4, A5, A6) traverse through the stator slots, with the path sequence indicated across multiple layers. The diagram shows how these paths are connected to form the winding, with jumper wires facilitating the connections between different layers.

Part (c) presents the combined embodiment of all paths (A1, A2, A3, A4, A5, and A6) using an alternate approach with a flyer jumper. This configuration shows the complete winding path layout for the entire stator, including all six paths across the layers. The use of flyer jumpers is indicated in the diagram, providing a more flexible and efficient way to connect the different winding paths.

The overall design uses full-pitch winding with parameters set as nL = 4, $n_{pp}$ = 2p = 6, p = 3, and q = 3, which are tailored to optimize the motor's performance and phase alignment. The figure demonstrates how the jumper approach is applied across all winding paths to achieve proper phase distribution and enhanced motor efficiency.

FIG. 23 shows a layout of a winding scheme for a 36-slot, 6-pole electric machine with full-pitch winding. These windings have integer slots/pole/phases (or $s_{pp}$). For example, 2 pole, 12 slot machine has spp=2. The integer slot winding has single layer winding for full-pitch windings, and double layer winding when coil span is reduced compared to full-pitch.

It should be noted that the terminal pin position can be arranged in different way to accommodate the preferred phase terminal position. E.g., all terminal pins are on the outermost layer or all terminal pins are on the outermost layer. This figure shows two embodiments of alternative terminal pin positions for a 36-slot, 6-pole electric machine with full-pitch winding. The first embodiment, shown in part (a), places all terminal pins on the outermost layer of the winding. The diagram illustrates the arrangement of the winding paths, with each slot connected to a corresponding path (A1, A2, A3, etc.), and the terminal pins indicated by arrows pointing to the outermost layer.

The second embodiment, shown in part (b), positions all terminal pins on the innermost layer of the winding. This configuration also shows the winding paths, but with the terminal pins now directed to the innermost layer. The diagram provides a detailed view of how the paths traverse through the different layers and the positioning of the terminal pins relative to the winding arrangement.

Both embodiments illustrate a winding configuration with parameters set as nL=4, npp=2p=6, p=3, and q=2, ensuring that the terminal pins are effectively positioned to facilitate proper phase alignment and performance. The figure demonstrates the flexibility of the design, allowing the terminal pin positions to be adjusted depending on the specific requirements of the motor's application.

FIGS. 24A and 24B show a flow chart of a method 2400, according to an example of the present disclosure. According to an example, one or more method blocks of FIGS. 24A and 24B may be performed in relation to an electric machine, such as those disclosed elsewhere herein.

As shown in FIGS. 24A and 24B, method 2400 may include selecting a plurality of hairpin wires to form a plurality of parallel paths such that each parallel path in the plurality of parallel paths spans all the slots per pole per phase of the electric motor (block 2402). For example, electric machine may select a plurality of hairpin wires to form a plurality of parallel paths such that each parallel path in the plurality of parallel paths spans all the slots per pole per phase of the electric motor, as described above. As in addition shown in FIGS. 24A and 24B, method 2400 may include arranging the plurality of hairpin wires such that each of the parallel paths in the plurality of parallel paths encompasses all of the hairpin layers (block 2404). For example, electric machine may arrange the plurality of hairpin wires such that each of the parallel paths in the plurality of parallel paths encompasses all of the hairpin layers, as described above. As also shown in FIGS. 24A and 24B, method 2400 may include maintaining an equal number of conductors for each of the parallel paths in the plurality of parallel paths regardless of slot position (block 2406). For example, electric machine may maintain an equal number of conductors for each of the parallel paths in the plurality of parallel paths regardless of slot position, as described above.

Method 2300 may include additional implementations, such as any single implementation or any combination of implementations described below and/or in connection with one or more other processes described elsewhere herein. In a first implementation, each of the parallel paths in the plurality of parallel paths begin at either an innermost layer of the hairpin layers or an outermost layer of the hairpin layers.

In a second implementation, alone or in combination with the first implementation, the hairpin windings are integrated slot distributed windings.

In a third implementation, alone or in combination with the first and second implementation, each of the parallel paths in the plurality of parallel paths is configured to implement layer changes prior to phasor changes.

In a fourth implementation, alone or in combination with one or more of the first through third implementations, the layer changes are achieved using a singular type of normal hairpin having a winding slot pitch and welding side.

In a fifth implementation, alone or in combination with one or more of the first through fourth implementations, the phasor changes are realized by jumpers with a jumper slot pitch equal to the winding slot pitch plus or minus an integer.

In a sixth implementation, alone or in combination with one or more of the first through fifth implementations, the phasor changes occur at either on innermost or outmost layers.

In a seventh implementation, alone or in combination with one or more of the first through sixth implementations, the phasor changes occur at both innermost and outmost layers.

It should be noted that while FIGS. 23A and 3B show example blocks of method 2300, in some implementations, method 2300 may include additional blocks, fewer blocks, different blocks, or differently arranged blocks than those depicted in FIGS. 23A and 3B. Additionally, or alternatively, two or more of the blocks of method 2300 may be performed in parallel.

Discussion above primarily focused on unified diagonal hairpin connection method for integrated slot distributed winding (ISDW) systems, representing a significant advancement in the design of hairpin windings. This method is particularly relevant for applications in traction motors, where high efficiency, performance, and reliability are essential. The proposed diagonal connection method simplifies the winding process, providing a uniform approach that can be applied across a range of ISDW configurations, ensuring both scalability and adaptability. By streamlining the connection process for hairpin windings, the disclosure not only reduces manufacturing complexity but also optimizes the utilization of copper in the winding, enhancing the overall efficiency of the motor.

Discussion now turns to hairpin winding designs with high parallel paths per phase and implementation methods to build upon this foundation. This discussion focuses on a different advanced aspect of hairpin winding design: increasing the number of parallel paths per phase. While the unified diagonal connection method focuses on simplifying and unifying the winding process for ISDW configurations, the current disclosure takes a step further by introducing a design that allows for high parallel path numbers, significantly improving motor efficiency, torque, and power density. This design is particularly suited for high-speed, high-power motors, where high DC link voltage limitations can impede performance.

Together, these innovations represent a comprehensive approach to optimizing the design and manufacturing of hairpin windings in traction motors. While the unified diagonal connection method addresses the standardization and flexibility needed for various ISDW configurations, the high parallel paths per phase design pushes the boundaries of what is possible in terms of motor performance and energy efficiency. The combination of these disclosures promises to not only streamline production processes but also enhance the capabilities of electric motors, particularly in applications demanding high torque, efficiency, and scalability.

FIGS. 24-27 now turn to this aspect of the disclosure. Specifically, FIG. 25 shows an example hairpin winding with 54 slots, 6 poles, q=p=3, np=6, $y_n$=9, $n_w$=2. This figure demonstrates the winding configuration for a 54-slot, 6-pole motor with 6 parallel paths per phase. It includes visual representations of the phase A winding layout and details on connecting the parallel paths through various layer groups using jumper wires. FIG. 26 shows an example hairpin winding with 54 slots, 6 poles, q=p=3, $n_p$=6, $y_n$=9, $n_w$=4. This figure shows the winding design for a 54-slot, 6-pole motor, using 4-layer hairpin windings. It highlights how the winding design can be treated as two 2-layer hairpin winding designs, with jump wires between different layer groups. FIG. 27 shows an example hairpin winding with 96 slots, 8 poles, q=p=4, $n_p$=8, $y_n$=12, $n_w$=2. This figure presents a winding configuration for a 96-slot, 8-pole motor with 8 parallel paths per phase. It includes an illustration of the first and second parallel paths starting from the top and bottom layers, respectively, and the necessary mechanical shifts for phases B and C. FIG. 28 shows an example hairpin winding with 96 slots, 8 poles, q=p=4, $n_p$=8, $y_n$=12, $n_w$=4. This figure illustrates a 96-slot, 8-pole motor design with 8 parallel paths per phase, incorporating 4-layer hairpin windings. It shows the division of the winding design into two 2-layer hairpin winding designs, with jump wires used between layer groups for connection.

These figures correspond to the examples provided hereinafter and demonstrate different slot-pole combinations and winding configurations for high-power electric motors, showcasing the flexibility and scalability of the hairpin winding design. Note that principles from this aspect can be combined or taken separately (in any combination) with the aforementioned principles.

The present disclosure pertains to the design of hairpin windings for electric motors, specifically focusing on a hairpin winding design that incorporates a high number of parallel paths per phase. The design aims to significantly enhance motor efficiency, reduce power losses, and provide flexible configurations for various motor designs. This disclosure is particularly beneficial for high-speed, high-power electric motors, especially when limited DC link voltage restricts the number of layers and parallel paths in traditional winding designs.

The hairpin winding design of the present disclosure relies on multiple parallel paths within each phase of the motor winding. Each parallel path occupies one slot per pole, and the slots are positioned in such a way that each parallel path is aligned under a different pole pair. This arrangement ensures that all parallel paths within a phase share the same electromotive force (EMF), ensuring that they are electrically aligned and work effectively together to maximize efficiency. The design utilizes a "layer-group" system, where each group consists of two layers. In a multi-layer hairpin winding configuration, the layers are grouped into two-layer groups, and jumper wires are used to connect different groups. This system provides flexibility and can be adapted to motors with various slot-pole combinations, making it suitable for different motor designs.

The relationship between the number of slots per pole per phase (denoted as q) and the number of pole pairs (denoted as p) must satisfy the relationship $q=j\times p$, where j is an integer. This ensures that the number of parallel paths per phase is sufficient to meet the efficiency and power density requirements of the motor. The number of parallel paths per phase can be adjusted based on the number of slots per pole. For example, in a 3-phase system, the maximum number of parallel paths per phase is $2\times q$, while in a 6-phase system, the maximum is qqq. However, fewer parallel paths can be used by connecting some of the paths in series, providing design flexibility.

The design also incorporates two types of conductors: one with equal leg lengths, used for most of the winding, and another with unequal leg lengths, where the longer leg is used for jumper connections between different layer groups. The conductors are preformed and bent to specific shapes to facilitate easy insertion into the stator slots, and the bending/twisting angle remains consistent across both conductor types. This ensures uniformity and consistency in the winding process. For innermost layer groups, only conductors with equal leg lengths are used, while outer layers require both types of conductors.

The manufacturing method for the hairpin winding involves several key steps. First, the conductors are inserted into the slots of the stator. Next, the conductors are twisted and welded at various points to ensure secure electrical connections between the conductors. For multi-layer windings, jump wires with a slot pitch of (yn+1-q) are used to connect different layer groups, ensuring electrical connections between the layers. Finally, connection rings are welded to the windings to finalize the electrical phase alignment for each group of parallel paths.

The disclosure is adaptable to various slot-pole combinations, such as 24 slots with 4 poles (where q=p=2), 54 slots with 6 poles (where q=p=3), 96 slots with 8 poles (where q=p=4), and 150 slots with 10 poles (where q=p=5). In each configuration, the maximum number of parallel paths per phase is $2\times q$. If fewer parallel paths are required, some parallel paths can be connected in series, offering flexibility for different motor designs and applications.

The design also provides several distinct advantages over conventional winding systems. One significant advantage is the reduction of AC losses, which is achieved by using small conductors with a higher number of parallel paths. This results in improved motor efficiency, especially at high speeds and power levels. The design also improves the slot fill factor, which allows for a higher power density without increasing the physical size of the motor. Additionally, the design reduces losses and improves efficiency, leading to higher torque production, which enables the motor to deliver better performance while maintaining or even reducing its size.

Flexibility is another key advantage of the design. The motor can be easily reconfigured to accommodate either 3-phase or 6-phase systems, and it supports a wide range of slot-pole combinations. This makes the motor suitable for various applications, including those with high-speed, high-power requirements. Furthermore, the reduced number of required winding shapes and the simplified manufacturing process reduce production costs and complexity, making the motor more cost-effective to produce.

Overall, the hairpin winding design with high parallel paths per phase, coupled with the associated manufacturing method, offers substantial improvements over traditional winding systems. It enhances motor efficiency, power density, and flexibility, making it ideal for a wide range of high-speed, high-power electric motor applications. By reducing losses and improving torque, the design ensures superior performance while maintaining or reducing the size of the motor. The simplified manufacturing process also lowers costs and complexity, providing a versatile and cost-effective solution for modern electric motor designs.

The present disclosure relates to electric machines, and more specifically, to an advanced hairpin winding design for electric motors that incorporates a high number of parallel paths per phase, and a manufacturing method that increases efficiency, reduces power losses, and provides flexible motor design configurations. The disclosure is particularly useful in the development of high-speed, high-power electric motors, including those with limited DC link voltage, where conventional winding systems may fail to meet performance expectations.

Electric motors require optimized winding configurations that maximize efficiency, minimize losses, and allow for high power density. However, traditional hairpin windings often use a limited number of parallel paths per phase, which restricts the motor's flexibility and performance, especially at higher speeds or power outputs. Furthermore, existing winding configurations fail to fully utilize the available copper, which results in increased copper losses, suboptimal torque, and less effective heat transfer. Additionally, the manufacturing processes for these windings are often complex and costly, requiring multiple winding shapes.

Thus, there is a significant need for an improved hairpin winding design that increases the number of parallel paths per phase, optimizes the use of copper, reduces manufacturing costs, and offers greater flexibility in motor design to accommodate a range of motor configurations.

The disclosure provides an improved hairpin winding design that incorporates a high number of parallel paths per phase, enhancing motor efficiency, power density, and torque, while reducing AC losses. The design is particularly effective for high-speed and high-power motors where limited DC link voltage restricts the number of layers and parallel paths that can be used. This design allows for a larger number of parallel paths without requiring excessively large conductors, improving motor efficiency without increasing size or cost.

The disclosure further includes an implementation method that simplifies the manufacturing process by reducing the number of different hairpin shapes needed, thereby reducing production costs. Additionally, the method enables flexible winding configurations, including the ability to easily switch between 3-phase and 6-phase systems, and supports various configurations with different parallel path numbers and layer groups.

The core feature of the disclosure is the use of multiple parallel paths within each phase of the motor winding, where each parallel path occupies one slot per pole. The slots are arranged in such a way that the parallel paths are positioned under different pole pairs, ensuring that the parallel paths in each phase share the same electromotive force (EMF) and remain electrically aligned. The winding configuration utilizes a "layer-group" system, where each group consists of two layers. In a multi-layer hairpin winding system, the layers are grouped into two-layer groups, and jumper wires are employed to connect different layer groups. This arrangement provides flexibility, allowing it to be adapted to motors with various slot-pole combinations, thereby offering versatility in design and application.

In the winding design, the number of slots per pole per phase, denoted as q, should be greater than 1, where q represents the number of slots per pole per phase and p represents the number of pole pairs. The relationship between q and p must satisfy the equation that q equals j multiplied by p, where j is an integer. This ensures that the number of parallel paths in each phase is sufficient to achieve the desired motor efficiency and power density. By carefully selecting the number of slots per pole per phase, the design ensures optimal performance across different motor configurations.

The number of parallel paths per phase is determined by the number of slots per pole. In a 3-phase system, the maximum number of parallel paths per phase is 2 times q, where q is the number of slots per pole. In a 6-phase system, the maximum number of parallel paths is q, though fewer parallel paths can be implemented by connecting some paths in series. For example, in a 3-phase system with a 2-layer hairpin winding, the design features two groups of parallel paths: one group with q parallel paths in the forward direction and another group with q parallel paths in the backward direction. The positioning of these paths within the slots ensures they are electrically aligned and share the same electromotive force (EMF), which is crucial for efficient operation.

The hairpin winding system utilizes two types of conductors. The first type consists of conductors with equal leg lengths, which are used for most of the winding. The second type includes conductors with unequal leg lengths, where the longer leg is used for jumper connections between layer groups. The innermost layer groups use only the equal leg-length conductors, while the outer layers may require both types of conductors. These conductors are preformed and bent into specific shapes to facilitate easy insertion into the stator slots. The bending and twisting angles of the conductors are kept consistent across both types, ensuring uniformity and precision throughout the winding process.

The method for manufacturing the hairpin winding involves several key steps. First, the conductors are inserted into the stator slots. Then, the conductors are twisted and welded at various points to ensure proper electrical connections. For multi-layer windings, jumper wires are used to connect different layer groups, with a specific slot pitch designed to enable electrical connections between the layers. After the winding is inserted and the connections are made, connection rings are used to connect the winding to the stator, ensuring the proper electrical phase alignment for each group of parallel paths.

The disclosure is applicable to a variety of slot-pole combinations, including configurations such as 24 slots with 4 poles, 54 slots with 6 poles, 96 slots with 8 poles, and 150 slots with 10 poles. In each configuration, the maximum number of parallel paths per phase is twice the number of slots per pole. If fewer parallel paths are required, some paths can be connected in series, allowing for flexibility in adapting the design to different motor applications and configurations.

The hairpin winding design with high parallel paths per phase offers several significant advantages over traditional winding systems. One major advantage is the reduction in AC losses, which is achieved by using smaller conductors with a higher number of parallel paths. This reduces losses, leading to improved efficiency, particularly at high speeds and power levels. Additionally, the improved slot fill factor allows for higher power density without increasing the physical size of the motor. The design also results in improved torque production, as the reduced losses and enhanced efficiency contribute to higher torque while maintaining or even reducing the motor's size. Furthermore, the design offers flexibility, as the motor can be easily reconfigured to accommodate either 3-phase or 6-phase systems and supports a wide range of slot-pole combinations, making it suitable for various applications. Another benefit is the cost-effective manufacturing process, as the reduction in the number of required winding shapes and simplified manufacturing steps lower production costs and complexity.

The hairpin winding design with high parallel paths per phase, coupled with the associated manufacturing method, provides substantial improvements over traditional winding systems. It enhances motor efficiency, power density, and flexibility, making it ideal for a wide range of high-speed, high-power electric motor applications. By reducing losses and improving torque, the design ensures superior performance while maintaining or reducing the motor's size. The simplified manufacturing process also lowers costs and complexity, offering a versatile, cost-effective solution for modern electric motor designs.

FIG. 29 shows a series of diagrams illustrating the winding configurations for a 24-slot, 4-pole electric motor with various phase designs and layer groupings. The first diagram demonstrates the configuration for a 3-phase motor with 4 parallel paths per phase. It highlights the number of parallel paths required and their connections through the layers. The winding paths for phase A, B, and C are shown, with phase shifts and mechanical degrees clearly indicated. The configuration can be adapted for different phase setups by shifting the electrical phases by 120° and 360° degrees. The second diagram illustrates the application of a 4-layer hairpin winding design with a 2-layer hairpin winding arrangement, where the winding is divided into different groups. The diagram shows how jumpers connect the layers between different groups and explains the connections from one layer to the next. The additional winding design offers a more flexible and scalable configuration for phase paths. The final diagram shows a 5-layer hairpin winding design for the same 24-slot, 4-pole configuration, further expanding on how the layers are connected. The diagram demonstrates how the jumper wires span between different groups, providing a more complex configuration for higher phase numbers and increased motor efficiency. These examples illustrate various winding strategies for different motor types, showcasing flexibility and scalability in electric motor designs. The diagrams emphasize how the number of parallel paths and the number of layers can be adjusted based on motor application requirements.

The table below lists some applicable slot-pole combinations for motor winding designs, showing the relationship between the number of slots and poles (q, p), the maximum parallel path numbers, and the applicable parallel path numbers for each configuration:

TABLE 3: Applicable SLOT-POLE combinations

| Slot-pole combinations | q, p | Maximum parallel path numbers np=2×q | Applicable parallel path numbers |
|---|---|---|---|
| 24 slots, 4 poles | q = 2, p = 2 | 4 | 2, 4 |
| 54 slots, 6 poles | q = 3, p = 3 | 6 | 2, 3, 6 |
| 96 slots, 8 poles | q = 4, p = 4 | 8 | 2, 4, 8 |
| 150 slots, 10 poles | q = 5, p = 5 | 10 | 2, 5, 10 |

This table presents the slot-pole combinations, where the first column shows the number of slots and poles, the second column defines the values of $qqq$ and $ppp$, the third column lists the maximum number of parallel paths, and the fourth column provides the applicable parallel path numbers for each configuration. These slot-pole combinations illustrate different winding setups that can be used to design motors with varying numbers of parallel paths per phase.

The following section provides practical examples of the motor winding design method outlined in the claims, demonstrating its application in various motor configurations. These examples highlight how the design method can be implemented in both high-speed and low-speed electric motors, showcasing the versatility of the high parallel path configuration across different motor types. By utilizing a layer-group winding configuration with jumper wires, and enabling both forward and backward parallel paths, these examples illustrate the flexibility and scalability of the design. Additionally, the examples will cover the adaptability of the winding method to 3-phase and 6-phase systems, emphasizing its potential to optimize motor performance and efficiency in real-world applications.

In Example 1, a method for creating hairpin windings for an electric motor in which a highest number of parallel paths per phase equals twice a number of pole pairs is achievable for any number of hairpin layers, the electric motor including a stator having a plurality of slots formed therein through which the hairpin windings are arrangeable, the method comprising: selecting a plurality of hairpin wires to form a plurality of parallel paths such that each parallel path in the plurality of parallel paths spans all the slots per pole per phase of the electric motor; arranging the plurality of hairpin wires such that each of the parallel paths in the plurality of parallel paths encompasses all of the hairpin layers; and maintaining an equal number of conductors for each of the parallel paths in the plurality of parallel paths regardless of slot position.

In Example 2, the method as Example 1 describes, wherein each of the parallel paths in the plurality of parallel paths begin at either an innermost layer of the hairpin layers or an outermost layer of the hairpin layers.

In Example 3, the method as either of Examples 1 or 2 describe, wherein the hairpin windings are integrated slot distributed windings.

In Example 4, the method as any of Examples 1-3 describe, wherein each of the parallel paths in the plurality of parallel paths is configured to implement layer changes prior to phasor changes.

In Example 5, the method as any of Examples 1-4 describe, wherein the layer changes are achieved using a singular type of normal hairpin having a winding slot pitch and welding side.

In Example 6, the method as any of Examples 1-5 describe, wherein the phasor changes are realized by jumpers with a jumper slot pitch equal to the winding slot pitch plus or minus an integer.

In Example 7, the method as any of Examples 1-6 describe, wherein the phasor changes occur at either on innermost or outmost layers.

In Example 8, the method as any of Examples 1-7 describe, wherein the phasor changes occur at both innermost and outmost layers.

In Example 9, an electric machine, comprising: a stator including a plurality of slots formed therein through which windings are arrangeable using a winding scheme; and hairpin windings arranged through the plurality of slots such that a highest number of parallel paths per phase equals twice a number of pole pairs is achievable for any number of hairpin layers, each parallel path in a plurality of parallel paths spans all the slots per pole per phase of the electric machine and encompasses all of the hairpin layers while maintaining an equal number of conductors for each of the parallel paths in the plurality of parallel paths regardless of slot position.

In Example 10, the electric machine as Example 9 describes, wherein each of the parallel paths in the plurality of parallel paths begin at either an innermost layer of the hairpin layers or an outermost layer of the hairpin layers, and wherein the hairpin windings are integrated slot distributed windings.

In Example 11, the electric machine as either of Examples 9 or 10 describe, wherein layer changes are achieved using a singular type of normal hairpin having a winding slot pitch and welding side.

In Example 12, the electric machine as any of Examples 9-11 describe, wherein phasor changes are realized by jumpers with a jumper slot pitch equal to the winding slot pitch plus or minus an integer.

In Example 13, the electric machine as any of Examples 9-12 describe, wherein the phasor changes occur at both innermost and outmost layers.

In Example 14, the electric machine as any of Examples 9-13 describe, wherein the electric machine is an electric motor.

In Example 15, the electric machine as any of Examples 9-14 describe, wherein the electric motor is a traction motor for an electric vehicle.

In Example 16, the electric machine as any of Examples 9-15 describe, wherein the electric machine is an electric generator.

In Example 17, a system for a stator assembly of an electric motor, comprising: a plurality of slots radially positioned around an inner cylindrical surface; and a winding scheme for the stator assembly applicable in all integrated slot distributed winding scenarios, the winding scheme including: selecting a plurality of hairpin wires to be arranged through the slots to form a plurality of parallel paths such that each parallel path in the plurality of parallel paths spans all the slots per pole per phase of the electric motor; arranging the plurality of hairpin wires such that each of the parallel paths in the plurality of parallel paths encompasses all hairpin layers; and maintaining an equal number of conductors for each of the parallel paths in the plurality of parallel paths regardless of slot position.

In Example 18, the system as Example 17 describes, wherein the winding scheme is further applicable for full-pitch windings and short-pitch windings.

In Example 19, the system as either of Examples 17 or 18 describe, wherein the winding scheme is further applicable to multiple three-phase windings with or without angle shift.

In Example 20, the system as any of Examples 17-19 describe, wherein the winding scheme incorporates a flyer jumper to implement a phasor change, the fly jumper including pins situated within separate hairpin layers and spanning across different slots between innermost and outermost layers of the hairpin layers.

In Example 21, a hairpin winding design for an electric motor, comprising: a plurality of parallel paths per phase, where each parallel path occupies one slot per pole in the stator of the motor, a layer-group winding configuration consisting of two layers, wherein multi-layer windings are grouped into two-layer groups, and jumper wires are used to electrically connect different layer groups, the number of parallel paths per phase is 2q for a 3-phase motor, where q is the number of slots per pole, the hairpin winding configuration is scalable, allowing for easy adaptation to 6-phase motor systems by adjusting the number of parallel paths per phase.

In Example 22, the hairpin winding design as Example 21 describes, wherein each of the parallel paths occupies one slot per pole and is positioned under different pole pairs to ensure uniform electrical phase alignment.

In Example 23, the hairpin winding design as either of Examples 21 or 22 describe, wherein the motor is configured for a 3-phase electric motor with q=2, such that the motor has a maximum of 4 parallel paths per phase.

In Example 24, the hairpin winding design as any of Examples 21-23 describe, wherein the motor is configured for a 6-phase system, with the number of parallel paths per phase being q.

In Example 25, the hairpin winding design as any of Examples 21-24 describe, wherein the two-layer groups are connected by jumper wires with a slot pitch of (yn+1-q), and the winding configuration allows for a high number of parallel paths to reduce AC losses and improve motor efficiency.

In Example 26, the hairpin winding design as any of Examples 21-25 describe, wherein the maximum number of parallel paths for a 3-phase motor is 2q, where q is the number of slots per pole.

In Example 27, the hairpin winding design as any of Examples 21-26 describe, wherein the hairpin windings include both forward and backward parallel paths, with the forward paths starting from the top layer and ending at the bottom layer, and the backward paths starting from the bottom layer and ending at the top layer.

In Example 28, the hairpin winding design as any of Examples 21-27 describe, wherein the parallel paths are electrically aligned to maintain the same electromotive force (EMF) for each path within a phase.

In Example 29, the hairpin winding design as any of Examples 21-28 describe, wherein the winding design allows for the insertion of both equal leg-length and unequal leg-length conductors, the unequal leg-length conductors being used for jumper connections between layer groups.

In Example 30, a method for manufacturing hairpin windings for an electric motor, comprising: inserting conductors into the slots of a stator of the motor, twisting and welding the conductors at various points to form a secure connection, using jumper wires with a slot pitch of (yn+1-q) to connect different layer groups of conductors, where each jumper wire connects the end of one layer group to the start of the next layer group, welding connection rings to the windings to ensure proper electrical phase alignment for each group of parallel paths.

In Example 31, the method as Example 30 describes, wherein the twisting and welding step ensures uniform voltage and current across all parallel paths by controlling the conductor geometry.

In Example 32, the method as either of Examples 30 or 31 describe, wherein the jumper wires are preformed to the correct length and angle to simplify the manufacturing process and reduce the risk of manufacturing defects.

In Example 33, the method as any of Examples 30-32 describe, wherein the welding connection rings step is performed to complete the electrical circuit and establish a secure connection for all parallel paths in the winding.

In Example 34, the method as any of Examples 30-33 describe, wherein the conductor insertion step uses conductors with both equal and unequal leg lengths, with the unequal leg-length conductors being used for jumper connections between different layer groups.

In Example 35, the method as any of Examples 30-34 describe, wherein the winding configuration includes both forward and backward parallel paths, with the forward paths starting from the top layer and ending at the bottom layer, and the backward paths starting from the bottom layer and ending at the top layer.

In Example 36, the method as any of Examples 30-35 describe, wherein the twisting and welding step includes the use of machines that ensure precise control over the winding, twisting, and welding of the conductors to maintain high efficiency in manufacturing.

In Example 37, the method as any of Examples 30-36 describe, wherein the jumper wires are welded to ensure a secure and reliable electrical connection between different layer groups.

In Example 38, a universally applicable method for assembling hairpin windings for electric motors of any desired number of parallel pairs, comprising: using conductors with equal leg lengths for the majority of the winding, and conductors with unequal leg lengths where the longer leg is used for jumper connections between layer groups, inserting these conductors into the stator of the motor and twisting them to form a secure electrical connection, connecting layer groups using jumper wires that have the same slot pitch of (yn+1-q) for all configurations, regardless of the number of parallel paths or layer groups, ensuring that the winding configuration maintains electrical alignment and maximizes the slot fill factor for the specific motor design.

In Example 39, the universally applicable method as Example 38 describes, wherein the jumper wires are inserted with a consistent slot pitch of (yn+1-q) across all motor configurations to maintain uniform electrical properties for the motor.

In Example 40, the universally applicable method as either of Examples 38 or 39 describe, wherein the conductors with unequal leg lengths are used only for connecting layer groups, while the remainder of the winding uses conductors with equal leg lengths.

In Example 41, the universally applicable method as any of Examples 38-40 describe, wherein the winding configuration allows for flexibility, enabling the number of parallel paths to be varied without altering the core method of assembly.

In Example 42, the universally applicable method as any of Examples 38-41 describe, wherein the conductors are preformed and bent to ensure proper insertion into the stator slots, thereby reducing manual labor during the manufacturing process and increasing production efficiency.

In Example 43, the universally applicable method as any of Examples 38-42 describe, wherein the insertion of conductors is performed in a stepwise manner, with each layer-group being inserted sequentially to ensure precise placement.

In Example 44, the universally applicable method as any of Examples 38-43 describe, wherein the winding configuration includes multiple layers, each layer being connected by jumper wires in a manner that is consistent across all configurations.

In Example 45, the universally applicable method as any of Examples 38-44 describe, wherein the conductor insertion step ensures that the conductors are positioned with the correct phase alignment to prevent circulating currents between parallel paths.

In Example 46, the universally applicable method as any of Examples 38-45 describe, wherein the winding configuration is adaptable for use in both high-speed and low-speed motors, with the same method of assembly applicable for different operating conditions.

In Example 47, the universally applicable method as any of Examples 38-46 describe, wherein the number of parallel paths per phase is determined by the number of slots per pole, with the configuration adaptable for both high-power and high-efficiency motors.

In Example 48, the universally applicable method as any of Examples 38-47 describe, wherein the conductors used in the winding are made from rectangular wire to maximize the slot fill factor, which minimizes AC losses and improves efficiency.

In Example 49, the universally applicable method as any of Examples 38-48 describe, wherein the jumper wire connection step is performed with precise control over the length and angle of each jumper wire to ensure uniform electrical properties across all parallel paths.

In Example 50, the universally applicable method as any of Examples 38-49 describe, wherein the winding method reduces the need for specialized equipment, making the manufacturing process more cost-effective and easier to scale.

In Example 51, a motor winding design method that allows for the implementation of high parallel paths per phase in both high-speed and low-speed electric motors, comprising: a plurality of parallel paths per phase, where each parallel path occupies one slot per pole, and the winding configuration utilizes both forward and backward parallel paths, a layer-group winding configuration with at least two layers, where jumper wires are used to connect different layer groups, a flexibility mechanism in the winding design to support scalable configurations for various motor types, such as 3-phase or 6-phase systems.

In Example 52, the motor winding design method as Example 51 describes, wherein the high parallel path design is implemented using a unified diagonal hairpin connection method applicable to integrated slot distributed winding (ISDW) systems, ensuring consistent performance across multiple motor configurations.

In Example 53, the motor winding design method as either of Examples 51 or 52 describe, wherein the flexibility mechanism allows for easy transition between 3-phase and 6-phase configurations, with the parallel paths configured to reduce AC losses and optimize efficiency for both high-speed and low-speed motors.

In Example 54, the motor winding design method as any of Examples 51-53 describe, wherein the jumper wires used to connect different layer groups are configured with a slot pitch of $(yn+1-q)(yn+1-q)$ to maintain uniform electrical properties and phase alignment between the layers.

In Example 55, the motor winding design method as any of Examples 51-54 describe, wherein the winding configuration supports a scalable number of parallel paths per phase, with the ability to connect parallel paths in series for reduced path numbers in lower power configurations.

In Example 56, the motor winding design method as any of Examples 51-55 describe, wherein the conductor system is made up of two types of conductors, one with equal leg lengths for the majority of the winding and one with unequal leg lengths, the longer leg used to connect jumper wires between layer groups.

In Example 57, the motor winding design method as any of Examples 51-56 describe, wherein the design allows for the use of both high parallel path numbers and a diagonal hairpin connection scheme to optimize slot fill factor and reduce copper loss, thereby enhancing torque/power density and heat transfer.

In Example 58, the motor winding design method as any of Examples 51-57 describe, wherein the method applies to motors with varying slot-pole combinations, and the winding design configuration is adapted for different motor sizes and power outputs.

In Example 59, the motor winding design method as any of Examples 51-58 describe, wherein the flexibility mechanism supports customizable winding layers, including the option for multiple-layer winding configurations, each layer being connected by jump wires to ensure series connection between different groups.

In Example 60, the motor winding design method as any of Examples 51-59 describe, wherein the winding system minimizes the number of different winding shapes required, reducing manufacturing complexity and cost while improving production efficiency.

As required, detailed embodiments of the present disclosure are disclosed herein; however, it is to be understood that the disclosed embodiments are merely exemplary of the disclosure that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present disclosure.

The foregoing disclosure provides illustration and description but is not intended to be exhaustive or to limit the implementations to the precise form disclosed. Modifications may be made in light of the above disclosure or may be acquired from practice of the implementations. As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein. As used herein, satisfying a threshold may, depending on the context, refer to a value being greater than the threshold, greater than or equal to the threshold, less than the threshold, less than or equal to the threshold, equal to the threshold, and/or the like, depending on the context. Although particular combinations of features are recited in the claims and/or disclosed in the specification, these combinations are not intended to limit the disclosure of various implementations. In fact, many of these features may be combined in ways not specifically recited in the claims and/or disclosed in the specification.

Although each dependent claim listed below may directly depend on only one claim, the disclosure of various implementations includes each dependent claim in combination with every other claim in the claim set. No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, a combination of related and unrelated items, and/or the like), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

## Claims

1. A method of forming a unified diagonal hairpin winding (840) for an electric machine (820), comprising:

   inserting rectangular conductors into slots (832) of a laminated stator core (822);
   arranging the conductors into multiple radial layers within the slots (832) such that each parallel path spans all slots per pole per phase and includes the same number of conductors;
   forming a number of parallel paths per phase (npp) equal to twice the number of pole pairs (2p), where p is a pole-pair number;
   executing layer changes prior to phasor changes using normal hairpins bent to a winding slot pitch (yn) with a uniform welding-side arrangement at a stator end (838);
   executing phasor changes on at least one of an innermost or outermost conductor layer using jumper conductors bent to a jumper slot pitch (yn $\pm$ k), where k is an integer, including flyer jumpers to connect between distinct layers; and
   welding the conductor ends in rows of uniform orientation on the welding side (838).

2. The method according to claim 1, wherein two or more of the parallel paths are connected in series to realize npp = 2p/2 or npp = 2p/3, the series connections being made with jumper conductors of pitch yn on at least one of the innermost or outermost layers, thereby shortening end-turn length and reducing copper loss.

3. The method according to claim 1, wherein flyer jumpers interconnect an innermost conductor layer and an outermost conductor layer, the flyer jumpers having unequal leg lengths to simplify insertion and maintain predetermined spacing at the welding side (838).

4. The method according to claim 1, wherein each parallel path originates from a common phasor position and sequentially transitions across other phasors, thereby balancing current distribution and suppressing circulating currents.

5. The method according to claim 1, wherein the winding (840) is short-pitched with a pitch ratio between 0.8 and 0.9 of a full-pitch winding, thereby suppressing 5th and 7th harmonic currents while maintaining a high fundamental winding factor.

6. The method according to claim 5, wherein the jumper pitch (yn $\pm$ k) is selected such that the fundamental winding factor is within $\pm$5% of that of a full-pitch winding.

7.  The method according to any one of claims 1 to 6, wherein the conductors are bent with unequal leg lengths on the welding side (838), thereby reducing bending stress and improving weld accessibility.

8.  The method according to any one of claims 1 to 7, wherein each conductor is coated with an insulating varnish, and the varnish is selectively removed from conductor end portions at the welding side (838), thereby lowering joint resistance.

9.  The method according to claim 8, wherein a thermally conductive resin is applied around an end-turn region, thereby enhancing heat dissipation to the stator core (822) and stabilising the winding (840) against vibration.

10. The method according to any one of claims 1 to 9, wherein the unified diagonal hairpin connection is applicable across slot-pole combinations including at least a 36-slot/6-pole machine, a 54-slot/6-pole machine, and a 72-slot/6-pole machine.

11. An electric machine (820) comprising:

    a laminated stator core (822) having a plurality of slots (832);
    a plurality of rectangular conductors arranged in multiple radial layers within the slots (832); and
    a unified diagonal hairpin winding (840) formed by a method according to any one of claims 1 to 10.

12. The electric machine (820) according to claim 11, wherein the winding (840) is configured for three-phase or six-phase operation with or without phase shift.

13. The electric machine (820) according to claim 11 or 12, wherein each parallel path terminates at a copper busbar positioned at the stator end (838), the busbar including radial extensions aligned with phase groups.

14. The electric machine (820) according to any one of claims 11 to 13, wherein weld rows are arranged at constant angular spacing around the stator circumference, thereby distributing thermal load evenly and enabling robotic welding alignment.

15. The electric machine (820) according to any one of claims 11 to 14, wherein the electric machine is part of an emobility application including at least one of a traction motor or an inverter.

**FIG. 1**

**FIG. 2**

EP 4 776 484 A1

**FIG. 3**

EP 4 776 484 A1

FIG. 4

FIG. 5

FIG. 6

OUTPUTS
714

700

INTEGRATED
AXLE(S)
202

ENGINE(S)
104

INPUTS
712

CONTROLLER 702

PROCESSOR
704

MEMORY
706

SENSORS
708

USER
INTERFACE
710

**FIG. 7**

**FIG. 8**

FIG. 9

Layer 1
Layer 2
Layer 3
Layer 4
Layer 5
Layer 6

**FIG. 9A**

Phase B1 (5,11,17,23,29,35)

Phase A2 (2,8,14,20,26,32)

Phase B2 (6,12,18,24,30,36)

30°

Phase A1 (1,7,13,19,25,31)

Phase C1 (3,9,15,21,27,33)

Phase C2 (4,10,16,22,28,34)

**FIG. 10**

(a) Embodiment of Path A1

(c) Embodiment of Path A3

(b) Embodiment of Path A2

(d) Embodiment of Path A1,A2, and A3

Embodiment of Path A1,A2, and A3 for 36-slot 6-pole machine with
full-pitch winding, $n_L=4$, $n_{PP}=2p$ (p>q, p=3, q2)

## FIG. 11A

EP 4 776 484 A1

(a) Embodiment of Path A4

(b) Embodiment of Path A5

(c) Embodiment of Path A6

(d) Embodiment of Path A4, A5, and A6

Embodiment of Path A4,A5, and A6 for 36-slot 6-pole machine with full-pitch winding, $n_L$=4, $n_{PP}$=2p=6 (p>q, p=3, q2)

# FIG. 11B

Embodiment of Path A1, A2, A3, A4, A5, and A6 for 36-slot 6-pole machine with full-pitch winding, $n_L$=4, $n_{PP}$=2p=6 (p>q, p=3, q2)

**FIG. 11C**

EP 4 776 484 A1

Phase connection for 36-slot 6-pole machine with
full-pitch winding, $n_L$=4, $n_{PP}$=2p=6 (p>q, p=3, q2)

**FIG. 11D**

EP 4 776 484 A1

Two pins at different layers
Normal hairpin with slot pitch of $y_n$

Two pins at different layers
Welding side with slot pitch of $(2^*y_p-y_n)$

Two pins at same layer
Jumper on either outermost or innermost layer

(g) Illustration of pins, jumpers, and welding side in 2-D winding connection diagram

Normal Hairpin
X1
Terminal Pin
A1
Welding side
Jumper (pin)
Path A1 only

Terminal Pins
3-phase with terminal pins

Insertion Side
Insection between jumps
3-phase without terminal pins

Welding Side

(h) Illustration of pins, jumpers, and welding side in 3-D model

**FIG. 12**

(a) All terminal pins are on the outermost layer

(b) All terminal pins are on the innermost layer

Embodiment of alternative terminal pin positions for 36-slot 6-pole machine with full-pitch winding, $n_L=4$, $n_{PP}=2p=6$ (p>q, p=3, q2)

# FIG. 13

(a) Path A1,A2, and A3

(b) Path A4,A5, and A6

(c) Path A1,A2,A3,A4,A5 and A6

Embodiment of Path A1,A2, A3,A4,A5, and A6 for 36-slot 6-pole machine
with full-pitch winding, $n_L$=6, $n_{PP}$=2p=6 (p>q, p=3, q=2)

**FIG. 14**

(a) Path A1,A2, and A3

(b) Path A4,A5, and A6

(c) Path 1,2,3,4,5, and 6

Embodiment of Path A1,A2, A3,A4,A5, and A6 for 36-slot 6-pole machine
with full-pitch winding, $n_L$=8, $n_{PP}$=2p=6 (p>q, p=3, q=2)

# FIG. 15A

EP 4 776 484 A1

(a) Method #1

(b) Method #2

36-slot 6-pole machine with full-pitch winding, $n_L$=4, $n_{PP}$=2p/2=3 (p>q, p=3, q=2):
Embodiment of a new Path by in series connecting Path A1 and A6

# FIG. 15B

(a) Path A1, A2, and A3 in series to form a new path

(b) Path A4, A5, and A6 in series to form a new path

36-slot 6-pole machine with full-pitch winding,$n_L$=4, $n_{PP}$=2p/3=2 (p>q, p=3, q=2):
Embodiment of a new Path by in series connecting Path A1,A2 and A3 and
Path A4, A5 and A6, separately.

# FIG. 15C

(a) Full-pitch winding

(a) Short-pitch winding

Winding diagram of a 36-slot 6-pole machine (p>q, p=3, q=2)

## FIG. 16

EP 4 776 484 A1

Embodiment of Path A1,A2, and A3 for 36-slot 6-pole machine with
short-pitch winding, $n_L$=4, $n_{PP}$=2p=6 (p>q, p=3, q=2)

## FIG. 17A

EP 4 776 484 A1

(b) Path 2&3

**FIG. 17B**

(a) Embodiment of Path A1, A2, and A3

(b) Embodiment of Path A4, A5, and A6

(c) Path A1, A2, A3, A4, A5, and A6

Embodiment of Path A1,A2, A3, A4, A5 and A6 for 54-slot 6-pole machine with full-pitch winding, $n_L=4$, $n_{PP}=2p=6$ (p=q, p=3, q=3)

## FIG. 18A

FIG. 18B

(a) All terminal pins are on the outermost layer

(b) All terminal pins are on the innermost layer

Embodiment of alternative terminal pin positions for 54-slot 6-pole machine with full-pitch winding, $n_L=4$, $n_{PP}=2p=6$ (p=q, p=3, q=3)

## FIG. 19

EP 4 776 484 A1

(a) Embodiment of Path A1, A2, and A3

(b) Embodiment of Path A4, A5, and A6

(c) Path A1, A2, A3, A4, A5, and A6

Embodiment of Path A1, A2, A3, A4, A5 and A6 for 72-slot 6-pole machine with
full-pitch winding, $n_L$=4, $n_{PP}$=2p=6 (p>q, p=4, q=3)

## FIG. 20

(a) All terminal pins are on the outermost layer

(a) All terminal pins are on the innermost layer

Embodiment of alternative terminal pin positions for 72-slot 6-pole machine with full-pitch winding, $n_L$=4, $n_{PP}$=2p=6 (p>q, p=3, q=3)

**FIG. 21**

(a) Embodiment of Path A1, A2, and A3

(b) Embodiment of Path A4, A5, and A6

(c) Path A1, A2, A3, A4, A5, and A6

Embodiment of Path A1,A2, A3, A4, A5 and A6 for 72-slot 6-pole machine with full-pitch winding, $n_L$=4, $n_{PP}$=2p=6 (p>q, p=3, q=2): Alternate approach with Flyer Jumper

## FIG. 22

36-slot, 6-pole machine with full-pitch winding

FIG. 23

Start

Select a plurality of hairpin wires to form a plurality of parallel paths such that each parallel path in the plurality of parallel paths spans all the slots per pole per phase of the electric motor    2302

Arrange the plurality of hairpin wires such that each of the parallel paths in the plurality of parallel paths encompasses all of the hairpin layers    2304

Maintain an equal number of conductors for each of the parallel paths in the plurality of parallel paths regardless of slot position    2306

Ensure each of the parallel paths in the plurality of parallel paths begin at either an innermost layer of the hairpin layers or an outermost layer of the hairpin layers    2308

Ensure the hairpin windings are integrated slot distributed windings    2310

Ensure each of the parallel paths in the plurality of parallel paths is configured to implement layer changes prior to phasor changes    2312

FIG. 24B

**FIG. 24A**

FIG. 24A

Ensure the layer changes are achieved use a singular type of normal hairpin having a winding slot pitch and welding side — 2314

Ensure the phasor changes are realized by jumpers with a jumper slot pitch equal to the winding slot pitch plus or minus an integer — 2316

Ensure the phasor changes occur at either on innermost or outmost layers — 2318

Ensure the phasor changes occur at both innermost and outmost layers — 2320

FIG. 24B

**FIG. 25**

FIG. 26

Front / inserting side
connection ($y_n$+1)

Back / welding side
connection ($y_n$)

N    S    N    S    N    S

$y_n$+1    End 2    End 3    End 1

Layer 2 ⎤ Layer
Layer 1 ⎦ group

Start 1    1    3    10    12    19    21    28    30    37    39    46    48    1    2    3
$y_n$    Start 2    Start 3

Start 4    Start 5    Start 6

$y_n$+1

Layer 2 ⎤ Layer
Layer 1 ⎦ group

1    3    10    12    19    21    28    30    37    39    46    48    1    2    3
End 4    $y_n$    End 5    End 6

**FIG. 27**

FIG. 28

Front / inserting side
connection (y$_n$+1)

Back / welding side
connection (y$_n$)

N          S          N          S

End 2                    End 1

y$_n$+1

Layer 2 ⎤ Layer
Layer 1 ⎦ group

19  20        1   2    y$_n$   7   8        13  14        19  20        1   2

Start 1          Start 2

Start 3          Start 4

y$_n$+1

Layer 2 ⎤ Layer
Layer 1 ⎦ group

19  20        1   2        7   8  y$_n$   13  14        19  20        1   2

End 3                    End 4

Front / inserting side
connection (y$_n$+1)

Back / welding side
connection (y$_n$)

Front / inserting side connection (y$_n$+1-q)c

Jump wire between layer groups

N          S          N          S

End 2                    End 1

y$_n$+1

Layer 4 ⎤ 2nd Layer
Layer 3 ⎦ group

y$_n$-1

Layer 2 ⎤ 1st Layer
Layer 1 ⎦ group

19  20        1   2   y$_n$   7   8  Start 2  13  14        19  20        1   2

Start 1          Start 3          Start 4

y$_n$+1

y$_n$+1

Layer 4 ⎤ 2nd Layer
Layer 3 ⎦ group

Layer 2 ⎤ 1st Layer
Layer 1 ⎦ group

19  20        1   2        7   8  y$_n$   13  14        19  20        1   2

End 3                    End 4

# FIG. 29

**FIG. 29
(CONT'D)**

Application Number

EP 25 22 6303

Europäisches
Patentamt
European
Patent Office
Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 135 165 A1 (HUAWEI DIGITAL POWER TECH CO LTD [CN]) 15 February 2023 (2023-02-15) | 1,2,4-6, 8-15 | INV. H02K3/28 H02K15/0643 |
| Y | * paragraphs [0002], [0003], [0005], [0007], [0040], [0050], [0068]; figures 1-17 * | 3,7 | |
| Y | CN 111 725 929 A (SAIC MOTOR CORP LTD) 29 September 2020 (2020-09-29) * figures 4a, 4b * | 3 | |
| Y | CN 110 277 841 A (FORD GLOBAL TECH LLC) 24 September 2019 (2019-09-24) * figures 6-8 * | 7 | |
| A | ZOU TIANJIE ET AL: "A Comprehensive Design Guideline of Hairpin Windings for High Power Density Electric Vehicle Traction Motors", IEEE TRANSACTIONS ON TRANSPORTATION ELECTRIFICATION IEEE, vol. 8, no. 3, 7 February 2022 (2022-02-07), pages 3578-3593, XP011915911, DOI: 10.1109/TTE.2022.3149786 [retrieved on 2022-02-07] * figure 16; tables 3, 4 * | 1 | TECHNICAL FIELDS SEARCHED (IPC) H02K |
| A | US 2021/305864 A1 (AHMED ADEEB [US] ET AL) 30 September 2021 (2021-09-30) * figures 3, 4, 6, 7 * | 1 | |

The present search report has been drawn up for all claims

| Place of search | Date of completion of the search | Examiner |
|---|---|---|
| The Hague | 2 June 2026 | Dragojlovic, Djordje |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 6303

This annex lists the patent family members relating to the patent documents cited in the above-mentioned European search report.
The members are as contained in the European Patent Office EDP file on
The European Patent Office is in no way liable for these particulars which are merely given for the purpose of information.

02-06-2026

| Patent document cited in search report | | Publication date | Patent family member(s) | | Publication date |
|---|---|---|---|---|---|
| EP 4135165 | A1 | 15-02-2023 | CN | 113726040 A | 30-11-2021 |
| | | | EP | 4135165 A1 | 15-02-2023 |
| | | | JP | 2022172129 A | 15-11-2022 |
| CN 111725929 | A | 29-09-2020 | CN | 111725929 A | 29-09-2020 |
| | | | EP | 3944467 A1 | 26-01-2022 |
| | | | JP | 7337945 B2 | 04-09-2023 |
| | | | JP | 2022522017 A | 13-04-2022 |
| | | | US | 2022140683 A1 | 05-05-2022 |
| | | | WO | 2020192181 A1 | 01-10-2020 |
| CN 110277841 | A | 24-09-2019 | CN | 110277841 A | 24-09-2019 |
| | | | DE | 102019105583 A1 | 19-09-2019 |
| | | | US | 2019288574 A1 | 19-09-2019 |
| US 2021305864 | A1 | 30-09-2021 | CN | 113452167 A | 28-09-2021 |
| | | | DE | 102021106897 A1 | 21-10-2021 |
| | | | US | 2021305864 A1 | 30-09-2021 |

EPO FORM P0459

For more details about this annex : see Official Journal of the European Patent Office, No. 12/82

**EP 4 776 484 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 00744824